# EUROPEAN PATENT SPECIFICATION

(11) **EP 4 805 823 B1**
(45) Date of publication and mention of the grant of the patent: **25.11.2026**
(21) Application number: 24833962.4
(22) Date of filing: 17.12.2024
(51) Int. Cl.: G06F 7/544

(54) **SECURE JOINT COMPUTATION OF ATTENTION FOR NEURAL NETWORKS**
SICHERE GEMEINSAME BERECHNUNG DER AUFMERKSAMKEIT FÜR NEURONALE NETZE
CALCUL CONJOINT SÉCURISÉ DE L'ATTENTION POUR DES RÉSEAUX NEURONAUX

(30) Priority: 20.12.2023 EP 23315470
(43) Date of publication of application: 16.09.2026
(73) Proprietor: Zama SAS, 75002 Paris (FR)
(72) Inventor: FRERY, Jordan Alain, 75002 Paris (FR); STOIAN, Andrei, 75002 Paris (FR); WALTER, Michael, 75002 Paris (FR)
(74) Representative: DeltaPatents B.V.
(86) International application number: PCT/EP2024/086960
(87) International publication number: WO 2025/132478

(56) References cited:
- WO-A1-2022/105627
- BOULEMTAFES AMINE ET AL: "PReDIHERO - Privacy-Preserving Remote Deep Learning Inference based on Homomorphic Encryption and Reversible Obfuscation for Enhanced Client-side Overhead in Pervasive Health Monitoring", 2021 IEEE/ACS 18TH INTERNATIONAL CONFERENCE ON COMPUTER SYSTEMS AND APPLICATIONS (AICCSA), IEEE, 30 November 2021 (2021-11-30), pages 1 - 8, XP034047453, DOI: 10.1109/AICCSA53542.2021.9686893
- KHAN KHALED M ET AL: "Secure Cloud Services: Matrix Multiplication Revisited", 2013 IEEE 16TH INTERNATIONAL CONFERENCE ON COMPUTATIONAL SCIENCE AND ENGINEERING, IEEE, 3 December 2013 (2013-12-03), pages 9 - 14, XP032573197, DOI: 10.1109/CSE.2013.12
- OLIYNYK DARYNA ET AL: "I Know What You Trained Last Summer: A Survey on Stealing Machine Learning Models and Defences", ARXIV.ORG, CORNELL UNIVERSITY LIBRARY, 201 OLIN LIBRARY CORNELL UNIVERSITY ITHACA, NY 14853, vol. 55, no. 14s, 17 July 2023 (2023-07-17), pages 1 - 41, XP059183936, DOI: 10.1145/3595292

## Description

### TECHNICAL FIELD

The presently disclosed subject matter relates to a cryptographic method for a server device, a cryptographic method for a client device, a server device, a client device, a computer readable medium.

### BACKGROUND

Cloud computing is on-demand access, via the internet, to computing resources-applications, servers (physical servers and virtual servers), data storage, development tools, networking capabilities, and more-hosted at a remote data center managed by a cloud services provider. Software as a Service (SaaS) is one application of cloud computing, where software is deployed in a cloud computing setting and accessed remotely through the internet.

Cloud computing lowers enterprise IT costs, lowers the deployment time of software solutions, substitutes capital investment (purchasing cost) for operational expenditure (subscription), and allows easy scaling to larger user counts.

Machine Learning is a discipline which comprises, among others, training predictive models from data. Oftentimes the training data, and the new data over which predictions are performed, are considered private or confidential by the user of the machine learning solution.

Deployment of machine learning predictive models can be done in either a local, on-premise, setting or in a cloud-computing SaaS setting.

In the on-premise deployment scenario, the client is responsible for providing the infrastructure to compute the model on their data. Any updates to the model must be handled in the same vein as software updates. Model performance monitoring must also be deployed with the client. One advantage of this approach is that the data stays on the client side and remains confidential, the server never sees the client's data. On the other hand, the model developer takes a risk in trusting the client with their model, which may have required high effort and costs to train-the client has complete control of the model in this case.

In the cloud deployment setting there are several advantages compared to the on-premise setting. Model updates are much easier to handle from the model developer point of view, as they only need to have access to the server which performs the predictions with the model. Any number of instrumentation and performance monitoring tools can be used together with the model. The main drawback of the cloud deployment setting is that the confidentiality of the data cannot be ensured. Legally binding agreements can be signed, but they would not protect against malicious attackers.

One way to avoid the drawbacks of cloud deployment would be to run the model locally, e.g., locally at a client. Unfortunately, this would require that the model weights, e.g., neural network weights, are shared with the client. Obtaining trained parameters would allow one to reproduce the model predictions exactly. An on-premise deployment runs the risk of leaking the model parameters. Since training a large neural network model may be very expensive, e.g., costing millions of dollars, there is a need to protect model weights when deploying a model on-premise, e.g., locally.

### SUMMARY

There is a wish to keep model parameters, e.g., neural network weights confidential. This could be achieved by running a neural network in the cloud only. This would conventionally require clients to send potentially sensitive information over a computer network to a server. This has the disadvantage that a client may not want or be allowed to share sensitive information. It is possible to compute the neural network on the server on data encrypted by the user according to a fully homomorphic encryption (FHE) scheme, but this has the disadvantage that computations become very resource intensive, and thus slow, expensive or both.

A potential solution may be to run only part of the neural network computation online, e.g., in particular parts that are fast to compute while encrypted with an FHE scheme. In this way, a client would not gain access to the model weights, or at least not to the full set of weights, the computation would remain fast, and no sensitive information needs to be shared by the client to the server, at least not in plain format. Unfortunately, the inventors realized that this approach is flawed. Operations that are fast in FHE are linear, and so, a curious but honest client could analyze the responses received from the server and use it to reconstruct the weights with which the computations were done using linear algebra. In fact, a malicious client could even craft special inputs to facilitate this reconstruction.

**In** an embodiment, at least part of a model's weights may be protected. By protecting even a part of the model's weight, it will not be possible for the client to fully reconstruct the model locally, and accordingly it will not be possible for the client to perform model evaluations locally. **In** an embodiment, the weights used in an attention computation may be protected.

Attention is a mechanism that is employed to in some neural networks (NN). A NN comprises multiple layers each capable of performing simple computations on a sequence of hidden states. The sequence of hidden state refers to the intermediate representation of the data as it flows through the layers of the model, from an input layer to an output layer. The layers in NN can be linear or non-linear, affecting how the model processes information. Linear Layers perform linear transformations. Non-Linear Layers introduce non-linearity into the model.

**In** some NNs an attention mechanism is employed. It enables the model to focus on different parts of the sequence of hidden states. The attention mechanism comprises the computation of three vectors for each hidden state: a query vector, a key vector, and a value vector. Together, these query vectors form the query matrix, key matrix, and value matrix. The attention mechanism combines query and key vectors to obtain weights, which are used to compute a weighted sum of the value vectors, forming the output of the attention mechanism.

Protecting the weights used in an attention computation may be achieved by a joint computation of the attention mechanism. For example, the attention weights used in a neural network may be computed jointly by a server device and a client device. Some parts of the attention weight computation may be performed locally, in particular a non-linear part of the computation, while other parts may be performed by a server device.

For example, the server device may compute an obfuscated query matrix and obfuscated key matrix for an attention layer in the neural network. For example, the obfuscated query matrix and obfuscated key matrix may correspond to a conventional unobfuscated query matrix and unobfuscated key matrix. Computing the obfuscated query matrix may comprise for each hidden state in a sequence of hidden states in a layer of the neural network the result of obfuscating with a first obfuscation operator a query vector corresponding to the hidden state. Computing the obfuscated key matrix may comprise for each hidden state in the sequence of hidden states in the layer of the neural network the result of obfuscating with a second obfuscation operator a key vector corresponding to the hidden state.

The obfuscation operators are arranged to cancel each other in an attention weight function computed by the client device. For example, the attention weight function may comprise the computation of raw attention weights, followed by an activation function. The obfuscation operators cancel in the computation of raw attention weights as one is an inverse of the other.

Because of the obfuscation operators the client cannot directly reconstruct the function used to compute the queries and/or keys. Without obfuscation these would be vulnerable to linear algebra based attacks.

Attention is a primitive that is used in various neural networks. Advantageously a joint neural network computation may be organized as a computation graph. Part of the operations in the computation graph are executed by the client device and part of the operations by the server device.

Most preferably, the data sent by the client device to the server is homomorphically encrypted, so that the server may perform computations on the data yet will not learn the contents of the data.

Advantageously, the joint computation of the neural network may be so arranged that operations that are expensive to perform while homomorphically encrypted are performed on the client device, while operations that are not so expensive to perform while homomorphically encrypted are performed on the server device. For example, affine operations in attention or in feed forward networks may be performed on the server while the other operations, in particular non-linear operations may be performed on the client device. Even if some operations requiring weights are performed on the client device, but some are not, then still the computation is bound to the cooperation of the server device.

Preferably, the obfuscation operators are periodically changed, e.g., after a time period, and/or after a predetermined number of computations; this may be after each computation. For example, obfuscated matrices may be precomputed during periods of low load. For best security, they are generated at every query.

Embodiments are described of a cryptographic method for a server device, a cryptographic method for a client device, a server device, a client device, and a computer readable medium.

An embodiment of the methods may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

Another aspect of the presently disclosed subject matter is a method of making the computer program available for downloading. This aspect is used when the computer program is uploaded into a server, and making the computer program available for downloading from the server.

### BRIEF DESCRIPTION OF DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,
Figure 1a schematically shows an example of an embodiment of a neural network computation system,
Figure 1b schematically shows an example of an embodiment of a neural network computation system,
Figure 2 schematically shows an example of an embodiment of a neural network computation system,
Figure 3a schematically shows an example of an embodiment of a neural network computation system,
Figure 3b schematically shows an example of an embodiment of a neural network computation system,
Figure 4 schematically shows an example of an embodiment of a cryptographic method for a server device for secure two-party computation of neural network attention weights with a client device,
Figure 5a schematically shows a computer readable medium having a writable part comprising a computer program according to an embodiment,
Figure 5b schematically shows a representation of a processor system according to an embodiment.

### Reference signs list

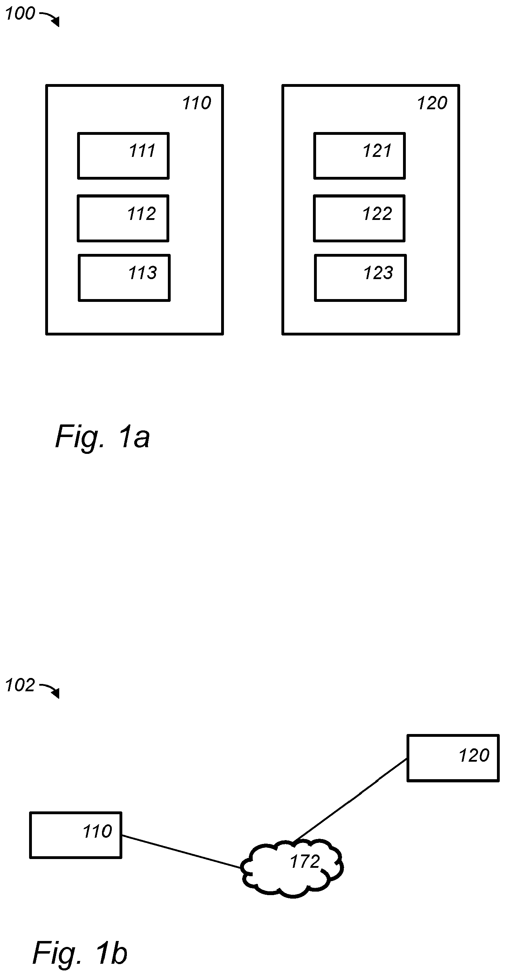

The following list of references and abbreviations corresponds to figures 1a-3b, 5a-5b and is provided for facilitating the interpretation of the drawings and shall not be construed as limiting the claims.
- 100, 102: a neural network computation system
- 110: a client device
- 120: a server device
- 111, 121: a processor system
- 112, 122: storage
- 113, 123: communication interface
- 172: a computer network

- 200: neural network computation system
- 210: a client device
- 211: a sequence of hidden states
- 212: a computation request
- 220: a server device
- 221: a computation result
- 230: an update loop
- 300, 301: neural network computation system,
- 310: a sequence of hidden states
- 311: an encrypted sequence of hidden states
- 321: encrypted obfuscated queries
- 322: encrypted obfuscated keys
- 323: encrypted values
- 324: obfuscated queries
- 325: obfuscated keys
- 326: values
- 330: raw attention weights
- 331: attention weights
- 340: attention output
- 350: a sequence of hidden states
- 351: an encrypted sequence of hidden states
- 360: encrypted permuted first affine operation result
- 361: permuted first affine operation result
- 370: non-linear function result
- 371: encrypted non-linear function result
- 380: encrypted second affine operation result
- 381: second affine operation result
- 1000, 1001: a computer readable medium
- 1010: a writable part
- 1020: a computer program
- 1110: integrated circuit(s)
- 1120: a processing unit
- 1122: a memory
- 1124: a dedicated integrated circuit
- 1126: a communication element
- 1130: an interconnect
- 1140: a processor system

### DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

Neural networks (NN) are computational systems that are inspired by the animal brain. They are used as statistical models that learn, using training data, to detect or generate patterns. Their most basic unit is the neuron, which performs a weighted combination of multiple inputs and applies an activation function. The inputs of the neuron can be the raw data or the activations of previous neurons.

An artificial neuron in a neural network performs the following computation: $y = ϕ \left({\sum }_{i} {w}_{i} {x}_{i} + b\right) = ϕ \left(s\right)$ (1) We denote the dot product between weights and inputs as the neuron accumulator s.

Large and complex neural networks have millions or billions of neurons arranged in successive groups called layers. We note that neural network convolutional layers or dense/linear layers perform the neuron accumulator computation: $s = {\sum }_{i} {w}_{i} {x}_{i} + b$ (2) where *wᵢ* are the learned weights, *xᵢ* are the inputs and b are bias values. In the case of convolutional layers i *= (c, y, x)* is a tuple of iterators for channels, the height and width of the input matrix, sometimes referred to as a tensor.

An Activation Function is a univariate function, e.g., it has a single variable input but can include constants, possibly even learnable constants. The activation function decides the output of a neuron, e.g., if a neuron should be activated or not, e.g., have a high or low output value,. This means that it will decide whether the neuron's input to the network is important or not in the process of prediction using simpler mathematical operations. Typically, all neurons in a layer use the same activation function.

The inputs and outputs of layers are commonly grouped in collections of matrices, sometimes referred to as tensors, e.g., 4-dimensional tensors. Furthermore, it is common for the activations of neurons to undergo normalization (such as batch normalization (BN) [7]), scaling, or non-linear operations before being taken as inputs to a following neural network layer.

A Neural Network can be represented as a sequence of layers, having inputs and outputs, where one layer's output can become the next layer's input. The layers are arranged in a Directed Acyclic Graph, thus there are no loops over layers in the computation.

Computation graphs are data structures that describe a sequence of operations that are performed on data, typically stored in one or more matrices. Tensors are a generalization of two-dimensional matrices to more than 2 dimensions; however a tensor may be regarded as a collection of matrices if needed. Typically, one limits oneself to computation graphs that are directed and acyclic.

Computation graphs may be used to represent neural networks, in stream processing systems, in databases. Many neural networks tools process computation graphs in order to train, to perform inference on neural networks or to compile neural networks to machine code.

An activation function in a tensor computation graph can be either a single node in the graph, which is then implemented in code as a sequence of elementary matrix operations, or it can be a sequence of matrix operations such as 'Add', 'Subtract', etc.

In a neural network, activation functions are typically Rectified Linear Unit, GELU, Softmax, Sigmoid, Exponential Linear Unit, among others.

The use of attention mechanisms in neural networks has grown significantly in various domains. These applications leverage the attention mechanism to focus on relevant parts of the input data, enhancing the model's ability to learn and make more accurate predictions or decisions in its specific field.

A neural network may operate on a sequence of hidden states. The hidden states may initially be obtained by encoding the input, e.g., in a so-called embedding layer. In a series of layers, the neural network iteratively processes the hidden states until they are ready to be output, e.g., by a final layer transforming the last sequence of hidden states to an output.

In an embodiment, an attention mechanism, or attention layer, computes three components for each hidden state: a query (Q), key (K), and value (V). The mechanism computes the raw attention weights, or attention scores, by comparing each query with all keys, typically using a dot product. These scores determine how much focus, or 'attention', each part of the input (each value) should receive. The attention scores are then used to create a weighted sum of the values, which forms the output of the attention layer. In a multi-head attention layer, the attention mechanism is performed multiple times after which the results are combined using a linear mapping.

For example, when applying an attention mechanism in an image classifier, each hidden state may represent a part of an image. For example, an input image may be divided into patches, which are then embedded as a sequence of hidden states. Likewise, when applying an attention mechanism in a language model, each hidden state might represent a word or a part of a sentence.

The application of attention mechanisms to these hidden states allows the network to vary the significance of these states in real-time, depending on their relevance to the ongoing task. This capacity for dynamic adjustment of hidden states imparts a greater degree of nuance and contextual understanding to the network's outputs, significantly boosting performance in a variety of applications.

Below a number of examples are given of neural networks in which the attention mechanism may be used.

In an embodiment, a neural network is configured for image or video processing. The neural network, in particular an attention layer therein, is computed jointly by a client device and a server device. For example, the neural network may be configured to apply attention to tasks like image classification and recognition. For example, the neural network may comprise an Image Recognition Model, such as the Vision Transformer (ViT). In medical imaging, the neural network may be configured to detect abnormalities in X-rays and MRI scans. Remote sensing leverages attention for analyzing satellite and aerial imagery for land cover classification and object detection. The same attention principles may be applied in video processing for actions like action recognition in video sequences.

In an embodiment, a neural network is configured for audio processing, with an attention layer that may be computed jointly by a client device and a server device. For example, the neural network may be configured for speech recognition, e.g., to transcribe spoken language into text. For example, a sequence of hidden states may be obtained from input audio by applying an embedding layer of the neural network to extracted features of the audio, e.g., spectral features of small, overlapping time windows. The sequence of hidden states may be iteratively refined, in particular in jointly computed attention layers. In multimodal applications, the neural network may integrate audio with other input data types, in particular image or video data. For example, this may be done to enhance performance, using attention to focus on the most relevant audio and visual cues. For example, this may be done to include image classification.

In the healthcare sector, an embodiment of a neural network incorporates attention mechanisms for applications such as drug discovery and patient monitoring. For example, in an embodiment, the neural network may be configured for predicting molecular properties in drug discovery, aiding in the creation of new pharmaceuticals. For patient monitoring, the attention layer of the neural network may be jointly computed by various devices to analyze and predict patient health trends based on a range of medical data inputs.

In an embodiment, the neural network comprises a large language model (LLM) comprising multiple attention layers. The large language model is configured for Natural Language Processing and/or generation. For example, the neural network may be configured for translation, text generation, sentiment analysis, question answering systems, and summarization.

In an embodiment, a neural network is configured as a generative neural network configured to generate data, e.g., multi-dimensional data, e.g., image and/or audio data. Synthetic data generation is useful in scenarios where real data is scarce or sensitive, such as in medical research for patient data privacy. Synthetic data generation may also be used to generate test data for rare situations, e.g., unsafe scenarios when testing autonomous vehicles. Attention mechanisms can be used to create realistic simulations of data. The generative neural network may be configured for text generation.

**Figure 1a** schematically shows an example of an embodiment of a client device 110 and of an embodiment of a server device 120. Client device 110 and server device 120 may be part of a neural network computation system 100.

Client device 110 and server device 120 are configured to cooperate in computing a neural network. Part of the computations required to compute the neural network are computed at client device 110 and part are computed at server device 120. In this way, it is avoided that server device 120 needs to divulge the weights of the neural network, or at least not all of the weights. Unfortunately, if client device 110 collects the input and output pairs of the computations performed by server 120, it becomes possible for client 110 to reconstruct the weights used in server 120's part of the computation. Accordingly, server device 120 is configured to obfuscate its return data, making this reconstruction considerably harder.

In an embodiment, client device 110 encrypts data that it sends to server device 120 for its part of the computation according to a homomorphic encryption scheme, e.g., a fully homomorphic encryption scheme (FHE). An FHE allows server device 120 to perform its computations without having to decrypt the data. Accordingly, client 110 can participate in this joint computation without fear of disclosing potentially sensitive client data. Although an FHE scheme allows in principle any computation to be performed, in practice some computations are much faster to perform in FHE than others. Unfortunately, computations that are fast in FHE are typically easiest to reconstruct. A construction is demonstrated that is both fast in FHE, yet is hard to reconstruct.

For example, the neural network computation system 100 may be used for so-called neural network comprising an attention computation, for example, transformer type neural networks. Attention is used in a wide range of neural networks, e.g., to process images, audio, and the like.

Client device 110 may comprise a processor system 111, a storage 112, and a communication interface 113. Server device 120 may comprise a processor system 121, a storage 122, and a communication interface 123.

In the various embodiments of communication interfaces 113 and/or 123, the communication interfaces may be selected from various alternatives. For example, the interface may be a network interface to a local or wide area network, e.g., the Internet, a storage interface to an internal or external data storage, an application interface (API), etc.

Storage 112 and 122 may be, e.g., electronic storage, magnetic storage, etc. The storage may comprise local storage, e.g., a local hard drive or electronic memory. Storage 112 and 122 may comprise non-local storage, e.g., cloud storage. In the latter case, storage 112 and 122 may comprise a storage interface to the non-local storage. Storage may comprise multiple discrete sub-storages together making up storage 112 and 122.

Storage 112 and/or 122 may be non-transitory storage. For example, storage 112 and/or 122 may store data in the presence of power such as a volatile memory device, e.g., a Random Access Memory (RAM). For example, storage 112 and/or 122 may store data in the presence of power as well as outside the presence of power such as a non-volatile memory device, e.g., Flash memory. Storage may comprise a volatile writable part, say a RAM, a non-volatile writable part, e.g., Flash. Storage may comprise a non-volatile non-writable part, e.g., ROM.

The devices 110 and 120 may communicate internally, with each other, with other devices, external storage, input devices, output devices, and/or one or more sensors over a computer network. The computer network may be an internet, an intranet, a LAN, a WLAN, a WAN, etc. The computer network may be the Internet. The devices 110 and 120 may comprise a connection interface which is arranged to communicate within neural network computation system 100 or outside of neural network computation system 100 as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna.

The communication interface 113 may be used to send or receive digital data, e.g., sending a sequence of hidden states used in the neural network computation, preferably in homomorphic encrypted form, receiving computation results from server 120, e.g., an obfuscated query matrix and obfuscated key matrix, preferably in encrypted form. The communication interface 123 may be used to send or receive digital data, e.g., receiving a sequence of hidden states used in the neural network computation, preferably in homomorphic encrypted form, sending computation results from server 120, e.g., an obfuscated query matrix and obfuscated key matrix, preferably in encrypted form.

Client device 110 may have a user interface, which may include well-known elements such as one or more buttons, a keyboard, display, touch screen, etc. The user interface may be arranged for accommodating user interaction for performing a neural network evaluation. For example, an image classification, say, a medical image classification may be initiated by a user, using said user interface.

The execution of devices 110 and 120 may be implemented in a processor system. The devices 110 and 120 may comprise functional units to implement aspects of embodiments. The functional units may be part of the processor system. For example, functional units shown herein may be wholly or partially implemented in computer instructions that are stored in a storage of the device and executable by the processor system.

The processor system may comprise one or more processor circuits, e.g., microprocessors, CPUs, GPUs, etc. Devices 110 and 120 may comprise multiple processors. A processor circuit may be implemented in a distributed fashion, e.g., as multiple sub-processor circuits. For example, devices 110 and 120 may use cloud computing.

Typically, the client device 110 and the server device 120 each comprise one or more microprocessors which execute appropriate software stored at the device; for example, that software may have been downloaded and/or stored in a corresponding memory, e.g., a volatile memory such as RAM or a non-volatile memory such as Flash.

Instead of using software to implement a function, the devices 110 and 120 may, in whole or in part, be implemented in programmable logic, e.g., as field-programmable gate array (FPGA). The devices may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, devices 110 and 120 may comprise circuits, e.g., for cryptographic processing, and/or arithmetic processing.

In hybrid embodiments, functional units are implemented partially in hardware, e.g., as coprocessors, e.g., cryptographic coprocessors, and partially in software stored and executed on the device. The coprocessor may comprise a GPU that allows fast parallel computations.

**Figure 1b** schematically shows an example of an embodiment of neural network computation system 102. Neural network computation system 102 may client device 110 and server device 120. The devices are connected through a computer network 172, e.g., the Internet. The client device 110 and server device 120 may be according to an embodiment.

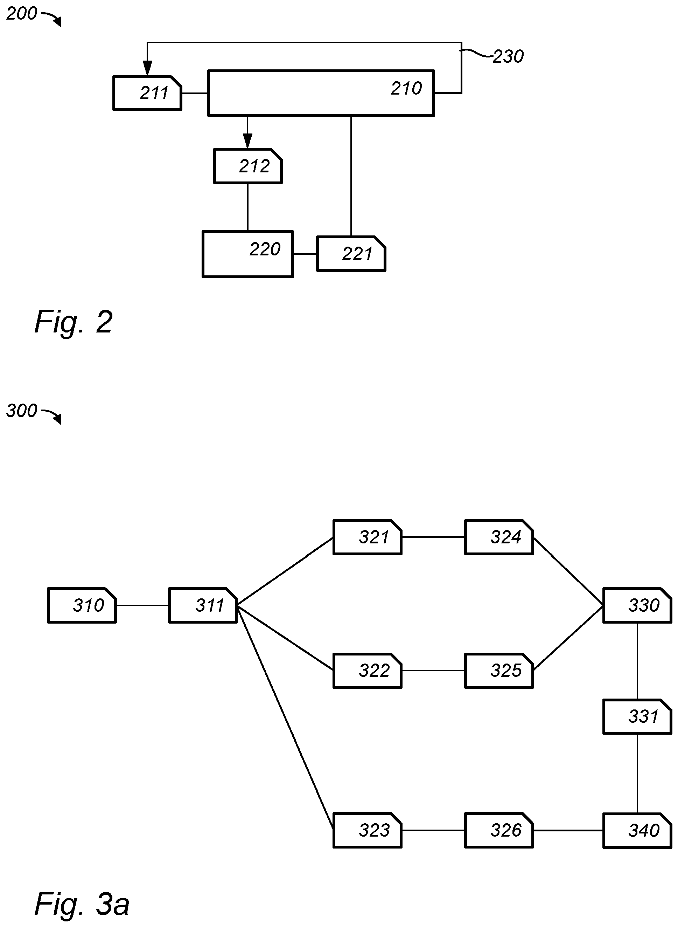

**Figure** 2 schematically shows an example of an embodiment of a neural network computation system 200. Figure 2 shows a client device 210 and a server device 220. Client device 210 and a server device 220 may be implemented on client device 110 and server device 120, respectively.

Client device 210 and server device 220 collaborate to compute a neural network together, wherein part of the operations in the computation is executed by client machine 210 and part of the operations by the server 220. For example, client device 210 and server device 220 may collaborate to compute an neural network output, e.g., a neural network prediction, given a neural network input. The neural network input may nevertheless only be available, at least only available in plain format, at the client device 210.

For example, the neural network computation may be represented by a computation graph, part of which, e.g., a first set of nodes, is computed by client device 210, and part of which, e.g., a first set of nodes, is computed by server device 220.

Client device 210 operates on a sequence of hidden states 211. For example, the hidden states may initially be obtained from an input, e.g., a list of input tokens, e.g., image patches, audio features, textual words, etc., e.g., transformed into hidden states by an embedding layer. Client device 210 then iteratively updates the sequence of hidden states 211, either by a computation on device 210, or by a computation wholly or partially performed on server 220. The hidden states are then updated in an update loop 230.

For example, to jointly evaluate the neural network, client device 210 may send a computation request 212 to server device 220. For example, computation request 212 may comprise the current sequence of hidden states 211, or some other intermediate computation result. Server device 220 then computes a computation result 221 and sends it back to client device 210. Client device 210 then uses the computation result to update the hidden state in update loop 230.

This architecture allows hiding from client device 210 at least part of the neural network weights. For example, if a computation involving neural network weights, typically a matrix multiplication, is performed on server device 220, then the corresponding neural network weights do not need to be locally available on the client device 210. Even if only part of the neural network weight remains hidden in this manner, it still effectively enforces that client device 210 cannot perform neural network computation without support from server device 220, and in particular the neural network cannot spread from client device 210 to other devices.

At least two computations appear to be particularly suitable for offloading are affine transformations, e.g., of the from *x* → *xA + b, or x* → *xA,* from client device 210 to server device 220: computing the affine transformation, e.g., a matrix multiplication, in an attention mechanism, and the affine transformation in a feed forward network (FFN). Embodiments that include one or both of these two cases are discussed below. The inventors realized that affine transformations are particularly suitable because homomorphic encryption schemes can compute these particularly efficiently. Especially, if the weights in the multiplicative part of the affine function, e.g., matrix A, have been quantized to be integer valued; also the optional matrix b may be quantized to be integer.

Unfortunately, there is a problem with the computation model shown in figure 2, that an attacker may attempt to exploit. An attacker may select a special computation request 212, e.g., comprising an artificial sequence of hidden states designed to extract information about the neural network weights stored on server 220. Such attacks are known as model extraction attacks, also known as model stealing. These attacks see the model and its execution environment, which can be in the cloud, as a black-box. The attacker obtains information that allows them to replicate the server's model exactly-thus losing the desired confidentiality of the model weights. Exact replication is desirable for an attacker as such attacks, if feasible, allow the model to be computed locally without involvement of server 220.

The computation request 212 typically comprise the sequence of hidden states 211. In an embodiment, the data in request 212 is encrypted with a homomorphic encryption scheme. The homomorphic encryption scheme is at least additively homomorphic, but preferably fully homomorphic. It is possible that the encryption is additively homomorphic, but not fully homomorphic. Note that an additively homomorphic encryption scheme will automatically support integer multiplication with a plain constant, e.g., through repeated addition, though may not support other arbitrary functions.

Homomorphic encryption is highly preferred, as it allows a client device 210 to share sensitive information, e.g., medical information, with server device 220 without server device 220 gaining plaintext access to the sensitive information. Nevertheless, if this aspect is not important, but protecting the neural network weights stored on server 220, or at least part thereof, against leaking, then homomorphic encryption may be omitted while obfuscation as described herein may be used. It will be assumed in embodiments, that data in computation request 212 is homomorphically encrypted, though embodiments may be modified to omit this aspect.

Sequence of hidden states 211 may be as long as an input window of the neural network allows. The sequence may, e.g., be at least 256 states long, at least 512, at least 1024 tokens long. The hidden states are typically represented as vectors. For example, the vectors may be at least 256 dimensional, 512 dimensional, 768 dimensional.

For example, the hidden states may be at least 512 dimensional, and the sequence may be at least 512 states long.

The neural network may comprise various layers that operate on sequence of hidden states 211. For example, in a transformer such as described in "Attention Is All You Need" by Vaswani et al. one or more or all of the following layers may be included the neural network to iteratively update the hidden states: Input Embedding Layer, Positional Encoding Layer, Multi-Head Attention Layer, Normalization Layer, Feed-Forward Layer, Output Embedding Layer, Final Linear Layer, and a Softmax Layer. Many other types of layers are known and may be used in neural networks that include an attention layer. For example, such a neural network may include one or more additional layers such as: Convolutional Layers, e.g., for spatial data processing, Cross-Attention Layers, e.g., for tasks involving different input sequences, Adaptive Computation Layers, e.g., for varying computation per input, different forms of Layer Normalization such as pre-layer normalization, Gated Layers, e.g., as seen in Gated Transformer Networks, Memory Layers, e.g., for long-term context storage, Recurrent Layers, e.g., in transformer hybrids, Auxiliary Output Layers, e.g., for additional training signals, Relative Positional Encodings, e.g., as an alternative to absolute positional encodings, and Sparse Attention Layers, e.g., for more efficient handling of very long sequences.

Some of the layers may be solely computed by client device 210. Some of the layers may be solely by server device 220, or jointly with client device 210.

**In** particular, the neural network may comprise an attention mechanism, e.g., an attention layer. The attention mechanism takes as input a sequence of hidden states, and produces an attention output, e.g., a weighted combination of values (V), which are typically vectors.

Server 220 is configured for secure two-party computation of neural network attention weights together with client device 210. The computation has been secured because obtaining the weights by chosen plaintext attacks by client device 210 is more difficult as explained below.

When the attention layer needs computation, client device 210 sends sequence of hidden states 211 to server device 220, e.g., in computation request 212. Sequence of hidden states represent an intermediate computation result of a neural network computation, e.g., the output of an embedding layer, a normalization layer, or some other type of layer.

There are various types of attention layers. Below is a first example of a multiplicative attention mechanism, the mechanism takes an input vector x of hidden states and performs $\begin{matrix}Q = {xW}_{Q} + {b}_{Q} \\ K = {xW}_{K} + {b}_{K} \\ V = {xW}_{V} + {b}_{V}\end{matrix}$ (4) Raw attention weights H may be computed as $H = {QK}^{T}$ (5)

A non-linear activation function is applied to the raw attention weights, in this example a softmax function. The raw attention weight may also be scaled, e.g., after applying the non-linear activation function. The resulting attention weights are then applied to a set of vectors V. The complete computation of the attention function may be: $x ′ = softmax \left(H\right) V$

In a practical implementation, part of the attention weights may be masked, to avoid attention being given to future tokens. Accordingly, attention may be computed as $x ′ = softmax \left(H∘M\right) V$ (6) where ∘ is the element-wise product and M is a constant upper-triangular matrix containing only values of 1 above the diagonal. Masking could also be done after applying the softmax. Masking could also be done by computing the raw attention weight only partially, e.g., only for the attention weights that are needed, e.g., by performing the matrix computation only for needed raw attention weights.

For example, in equations 4-6, x may represent a matrix, the rows of which are the sequence of hidden states of the neural network. The matrices may have the following dimensions $x : N ⋅ d$ ${W}_{Q} , {W}_{K} , {W}_{V} : d ⋅ h$ $Q : N ⋅ h$ $H : N ⋅ N$ wherein, N is the number of hidden states, e.g., the size of a window of tokens to which the neural network attends, d is the dimension of the hidden states, e.g., the embedding dimension, h is the dimension of queries, keys, and values (note, the dimension of value vectors could be different from the dimension of query and key vectors). Dimension h may be equal to d, but is typically smaller. Representing states as row vectors is optional, column vectors may be used instead.

An unsecure protocol for joint computation of attention, which does not use obfuscation may be as follows.
1. The client encrypts x, the query feature vector. They send it to the server
2. The server computes Q and K while encrypted in FHE using weights stored on the server, and sends them Q and K to the client
3. The client decrypts Q and K and performs the attention weight functions: computing the raw attention weights *H* and then computes attention weights *x'* by applying a non-linear function.

The reason this protocol is not secure is that an attacker can retrieve *W_{Q}, W_{K}* in a linear number of queries by using one-hot vector chosen-plaintexts. By artificially setting only a single one in each row of x, a single row of the *W_{Q},* and/or *W_{K}* can be obtained. There is a desire to protect the weights in *W_{Q}* and *W_{K}* from leaking, or at least increase the number of queries needed, making this attack less practical.

To illustrate the problem of attacks on the weights, assume for simplicity the biases are zero and consider, $M = {W}_{Q} {W}_{K}^{T}$ (9) Note that this is a different M, then the one used above for masking. An attacker could send one-hot vectors and obtain M which allows them to perform inference on their own. But this attack has a *N*² complexity, where *N* is the embedding dimension (length of *x),* the attacker would need to send two queries (two x one for Q, one for K) with the 1 placed in indices i in the first query and *j* in the second query to obtain *M*[*i, j*]*.* Alternatively if only a single *x* can be sent to compute both Q and *K,* the attacker could use a two-hot vector to obtain *M[i, i] + M[i,j] + M*[*j, i] + M*[*j, j*]*.* Sending 4 two-hot queries would allow the attacker to build a system of equations and solve for *M[i, i], M[i,j], M*[*j, i], M[j, j].* The number of queries necessary remains *O*(*N*²)*.* Variants of this attack work also for non-zero biases, or if the attacker is restricted to using naturally occurring hidden states instead of specially crafted vectors.

In an embodiment, server 220 selects random first and second obfuscation operators. The query matrix Q is then computed in obfuscated form by including for each hidden state in the sequence of x, the result of obfuscating with the first obfuscation operator in each query vector. Likewise, the key matrix K is computed in obfuscated form by including for each hidden state in the sequence of x, the result of obfuscating with the second obfuscation operator in each key vector. The first and second obfuscation operator are chosen so that they cancel each other out when client device 210 continues to compute the raw attention weight.

For example, in the multiplicative attention mechanism defined above, server 220 may multiply matrix Q by a matrix *U* and *K* by the transpose inverse of *U.* For example, as follows $\begin{matrix}Q ′ = QU = \left({xW}_{Q}+{b}_{Q}\right) U \\ K ′ = K {\left({U}^{- 1}\right)}^{T} = \left({xW}_{K}+{b}_{K}\right) {\left({U}^{- 1}\right)}^{T}\end{matrix}$ (7)

The dimension of the matrix U may be *h · h.* Note that Q and *K* in this example are encrypted matrices, while first obfuscation operator U and second obfuscation operator (*U*^{*-*1})*^{T}* are plain. These formulas are one way of including first and second obfuscation operators but there are others.

Note that the matrices U and *U*⁻¹ are used in plain format at the server. For example, *x* is received by the server in encrypted format. The server has *W_{Q}, b_{Q}, U* in plain format. The result of (*xW_{Q} + b_{Q}*)*U* is only available in an encrypted format. The same holds for the computation of K. Optionally, the computation of V may be done locally by the client; Although in an embodiment, the server may be configured to compute V instead, e.g., using encrypted data.

Depending on the homomorphic encryption the matrices *W_{Q}, b_{Q}, W_{K}, b_{K},* and optionally *W_{V}, b_{V},* are integer matrices, e.g., obtained by quantizing corresponding floating point matrices obtained from training the neural network.

Preferably, we take U to be an invertible matrix. This could be an integer invertible matrix with an integer inverse, that is, an unimodular matrix. Interestingly, it can be proven mathematically that if U is chosen each time from a suitable distribution then this is secure to N^2 security -more technically, this security level can be proven if U is chosen uniformly from the set of invertible matrices over a finite field, over which Q and K are also defined.

In practice, it is not necessary to select U quite that randomly. Preferably, matrix U has the several non-zero entries in each column, say at least 2, or at least 4, or at least a number obtained from an increasing function of *h,* e.g., at least *√h* non-zero entries in each column.

Preferably, U is not selected from the group of permutation matrices, or from the group of integer orthogonal matrices, but from a larger group. Matrices in these two groups have columns with a single 1, or a single 1 or -1 value and all other values are 0. Although such matrices add a low amount of obfuscation, a much better protection is obtained by choosing a more random U, with more non-zero entries.

The computation performed by the client can be written, ignoring the biases for simplicity as: $\begin{matrix}H & = {QK}^{T} \\ & = {xW}_{Q} U {\left({xW}_{K}\left({U}^{- 1}\right)\right)}^{T} \\ & = {xW}_{Q} U {\left({U}^{- 1}\right)}^{T} {W}_{K}^{T} {x}^{T} \\ & = {xW}_{Q} {W}_{K}^{T} {x}^{T}\end{matrix}$ (8)

Alternatively when biases *b_{Q}* and *b_{K}* are not zero, one can write: $\begin{matrix}H & = Q ′ K {′}^{T} \\ & = \left({xW}_{Q}+{b}_{Q}\right) U {\left(\left({xW}_{K}+{b}_{K}\right){\left({U}^{- 1}\right)}^{T}\right)}^{T} \\ & = \left({xW}_{Q}U+{b}_{Q}U\right) {\left({xW}_{K}{\left({U}^{- 1}\right)}^{T}+{b}_{K}{\left({U}^{- 1}\right)}^{T}\right)}^{T} \\ & = {xW}_{Q} U \left({U}^{- 1}\right) {W}_{K}^{T} {x}^{T} + {b}_{Q} U \left({U}^{- 1}\right) {W}_{K}^{T} x + {xW}_{Q} U \left({U}^{- 1}\right) {b}_{K}^{T} + {b}_{Q} U \left({U}^{- 1}\right) {b}_{K}^{T} \\ & = {xW}_{Q} {W}_{K}^{T} {x}^{T} + {b}_{Q} {W}_{K}^{T} x + {xW}_{Q} {b}_{K}^{T} + {b}_{Q} {b}_{K}^{T}\end{matrix}$

In both cases, a non-linear function would be applied to the raw attention weights H, e.g., an activation function, e.g., a softmax function, to obtain the attention weights.

Note that the first obfuscation operator and the second operator function cancel out in the attention weight computation. Indeed, in these examples the obfuscation operators cancel out during the computation of the raw attention weights, and continue to stay cancelled out during the linear-function application.

The client may use the attention weights to compute a weighted sum of value vectors, e.g., as $Attention \left(Q, K, V\right) = softmax \left(\frac{H}{\sqrt{{d}_{k}}}\right) V .$. Herein the non-linear function applied to the raw attention weights is SoftMax, and optional scaling has been introduced. The computation of the V may be done locally at the client, or at the server.

In an embodiment, the server device may select random invertible matrices U and *U*⁻¹. The computation of *Q =* (*xW_{Q} + b_{Q}*)*U* can be optimized to avoid two ciphertext-clear matrix multiplications by computing *Q = xA + b_{Q}U,* where *A =* W*_{Q}U* and the same for *K.* An FHE circuit may be generated to compute Q and *K* as in using these matrices.

For example, in an embodiment, the server periodically computes obfuscated matrices for the Q computation, e.g., A, and optionally *b_{Q}U,* and the corresponding matrices for K. For example, every *T* requests for attention computation, or every *T* seconds, such matrices may be computed.

Fully Homomorphic Encryption (FHE) is a family of cryptosystems that allow one to perform arithmetic operations on encrypted data. The use of FHE is advantageous in embodiments. In a system that implements FHE, the server will contain values that are encrypted even during computation. FHE systems allow for example the addition of two encrypted values and multiplication of encrypted values. Some FHE systems, such as TFHE, allow applying a non-linear function to encrypted values, where this function is given by a look-up table.

Fully Homomorphic Encryption is a family of encryption schemes that allow performing computations over encrypted data. Homomorphic cryptography allows one to execute computer programs, e.g., circuit evaluations, function evaluations, etc., over encrypted data by a party without that party being able to decrypt. For example, input data and computation results may be received and returned in encrypted form. Intermediate data, e.g., an internal state of the computation, may also be in encrypted form. Even though the output of the computer program is returned in an encrypted form, when decrypted the output is expected to be the same, or very close to, as if the operations had been performed on the unencrypted data. Homomorphic encryption can be used for privacy-preserving outsourced storage and computation. This allows data to be encrypted and outsourced to a cloud environment for processing and/or storage, all while encrypted. In particular, homomorphic cryptography techniques exist that can be used, at least in principle, to compute any function on encrypted data. Such techniques are referred to as "fully homomorphic encryption" (FHE) techniques.

The execution environment may be provided by various homomorphic encryption techniques. One such homomorphic encryption system is described in Chillotti, I., Gama, N., Georgieva, M. et al. TFHE: Fast Fully Homomorphic Encryption Over the Torus. J Cryptol 33, 34-91 (2020), https://doi.org/10.1007/s00145-019-09319-x

Generally, FHE-like homomorphic encryption schemes can be based on lattice encryption, e.g., LWE or NTRU encryption. For example, encrypted data may be received as LWE-type ciphertexts. Using technologies as described in the above paper, computations can be performed on an LWE-type ciphertext even though the secret key is unknown to the homomorphic computing device.

Fully Homomorphic Encryption schemes use noisy ciphertexts for security reasons, e.g., ciphertexts containing some randomness. This noise grows after every performed homomorphic operation. If the noise is not controlled, it can compromise the message and cause incorrect decryption of the output ciphertexts at the user. A technique called bootstrapping, e.g., from [13], allows reducing the noise when it has grown. By using bootstrapping frequently, thus reducing noise when needed, one can perform as many homomorphic operations as one wants.

An example of an additive homomorphic encryption scheme that is not fully homomorphic is the Paillier cryptosystem. The Paillier cryptosystem is a partially homomorphic encryption scheme that supports only one specific type of homomorphic operation: addition. It allows one to perform homomorphic addition operations on ciphertexts, but not multiplication or more general computations.

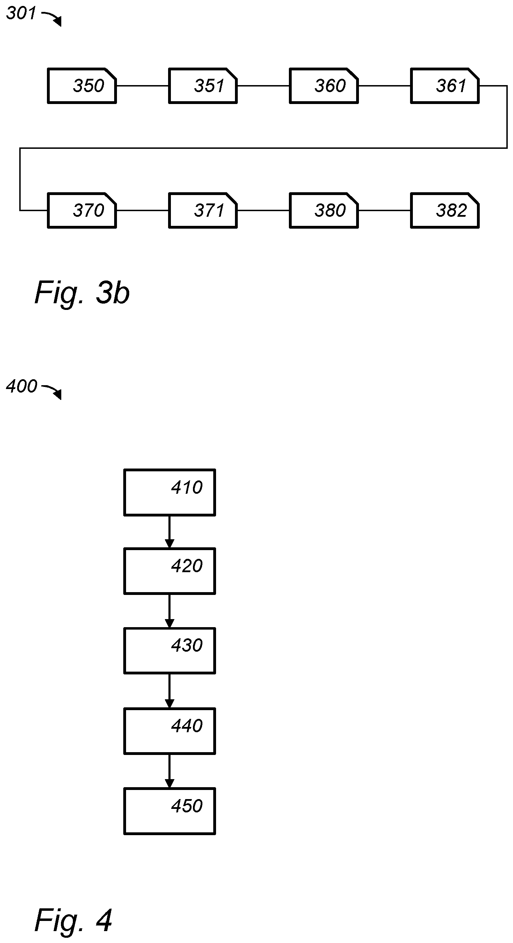

**Figure 3a** schematically shows an example of an embodiment of a neural network computation system 300. The computation shown in figure 3 shows how to jointly compute attention output 340.

Shown in figure 3a is a sequence of hidden states 310 which is available at a client device, such as client device 110 or client device 210. The client device encrypts sequence 310 to obtain an encrypted sequence of hidden states 311. The encryption uses at least an additive homomorphic encryption scheme, but preferably uses an FHE, such as TFHE.

A server device, such as server device 120 or server device 220 receives the encrypted sequence of hidden states 311. The server now proceeds to compute encrypted obfuscated queries 321, e.g., a query matrix, and encrypted obfuscated keys 322, e.g., a key matrix. As a consequence of working on encrypted data, in this case homomorphically encrypted data, the server will not obtain the hidden states, nor the obfuscated queries or keys in plain format. Computing queries and keys typically comprise applying an affine operator to the hidden states.

Note that the server will select a first obfuscation operator to include in the computation of the queries, and a second obfuscation operator to include in the computation of the keys.

There are many types of attention. In each case, the server computes the queries Q and keys K and sends them to client. The client decrypts them and thus obtains obfuscated queries 324 and obfuscated keys 325; they are in plain format, in the sense that they are not encrypted with the homomorphic encryption, nevertheless that are still obfuscated. The client now proceeds with computing the raw attention weights 330 from obfuscated queries 324 and obfuscated keys 325. The attention weights 331 are computed from raw attention weights 330. This typically comprises applying a non-linear function to the raw attention weights, and optionally a scaling of the raw attention weights 330 before applying the non-linear function. The scaling may depend on the dimension of the query vectors. The obfuscation operators are designed to cancel out in this process.

There are several types of attention mechanisms. Depending on the attention mechanisms a different obfuscation may be employed. The attention mechanisms to use are fixed for a particular neural network.

For example, in an embodiment, the neural network comprises a multiplicative attention mechanism. Multiplicative attention comprises multiplying with the query matrix and the key matrix.

For example, in dot-product attention, the raw attention weights are computed as *Q · K^{T} .* For example, in scaled dot-product attention, raw attention weights are computed as *α · Q · K^{T},* in which *α* is a factor. For example, the factor *α* may be $1 / \sqrt{h}$, where h is the dimension of queries and keys. Other factors may be used, e.g., *1*/*h,* or a learned factor. Because the client computes the raw attention weights in plain it is no problem to scale by any particular factor by the client, obtaining a floating point number. For example, in cosine similarity attention, the raw attention weights are computed as *Q · K^{T}* / ∥*Q*∥∥*K*∥*.* In cosine similarity attention, the server may compute Q and *K* in obfuscated form, while the rest of the attention computation is performed by the client. Note that the computation of ∥*Q*∥∥*K*∥ is done for each pair of query and key vector, and used to scale the corresponding entry in the matrix product.

In multiplicative attention, the first obfuscation operator may comprise an invertible matrix U, which may be multiplied with the unobfuscated query matrix, and the second obfuscation operator may comprise the inverse of the first operator *U*⁻¹, which may be multiplied with the unobfuscated key matrix. The first and second operator would thus cancel during computation of the raw attention weights by the client.

Depending on the type of homomorphic encryption used, further requirements may be placed on matrix U. In particular, for an additive homomorphic encryption, matrix U and *U*⁻¹ are preferably integer, which implies that they are unimodular. Also for some fully homomorphic encryption schemes, e.g., TFHE, FHEW, BHV, it is preferred for efficiency to use a unimodular matrix.

For example, in an embodiment, the neural network comprises an additive attention mechanism. Additive attention comprises subtracting the query matrix and the key matrix. For example, raw attention weights may be computed as D = |*Q* - *K*|. This difference may be modified by one or more learned feed forward layers, e.g., *WD + b* followed by an activation function. For example, two FFN may be used, possibly each with a different activation function, e.g., the first using a tanh activation function, and the second using softmax function. Like multiplicative attention, raw additive attention weights can also be scaled. Another example is Gaussian kernel attention in which the raw attention weights are computed as *exp*(*-*∥ *Q - K* ∥²/2σ^2). Also here an activation function like softmax would be applied and the resulting attention weights are used to compute a weighted sum of values, e.g., value vectors.

In additive attention, the first obfuscation operator may comprise a matrix U, which may be added to the unobfuscated query matrix, and the second obfuscation operator may comprise the same operator U, which may be added with the unobfuscated key matrix. The first and second operator would thus cancel during computation of the raw attention weights by the client. As for multiplicative attention, the matrix may be selected to be an integer matrix, preferably a randomly selected integer matrix. Note that the level of security offered by obfuscation in the additive case is lower than the level of security offered by obfuscation in the multiplicative case. In the latter case, a formal security proof is possible giving a guaranteed level of security under some randomness assumptions. This is not the case for the additive case.

After computing raw attention weights, the client device applies an activation to the raw attention weights, e.g., a softmax or tanh function. Typically, softmax is used. It may be that some of the attention weights are not necessary, e.g., they should be set to 0. This can be achieved in various ways, e.g., by masking the corresponding raw attention weights, etc.

Obfuscation increases the workload an attacker needs to invest to reconstruct the weight matrices used in the attention computation. This works both for additive and for multiplicative attention, but for the latter it is especially effective.

Note that query and key computation can be done in parallel.

The attention weights 331 are applied to vectors computed for each hidden state, typically multiplied therewith. In an embodiment, the server computes encrypted values 323, e.g., value vectors, from hidden states 311. Value computation may be the same in multiplicative and additive attention. The computed value vectors 323 are returned to the client, where they are decrypted to obtain values 326. The values 326 can then be combined with the attention weights 331, e.g., to compute a weighted sum of values 326. For example, for each hidden state the attention weights for that state may be multiplied with the value vectors computed for all hidden states, the results of which are added. Formulas are given above. The final output is attention output 340, which comprises a vector for each hidden state.

Instead of computing value vectors on encrypted hidden states, one can also compute the value vectors on the client device. In this case, no encrypted values 323 are computed, and instead values 326 are directly computed from hidden states 310.

The attention output 340 may be used in a next layer, e.g., an add & norm layer, etc. The attention output 340 may also be part of a multi-headed attention layer, for example, multiple attention vectors may be combined, and a matrix multiplication may be applied to the combined vector.

In an embodiment, a system comprised of a client machine and a server machine
- where the client and server collaborate in a session to compute a tensor computation graph representing a neural network machine learning model
- where some operations in the tensor computation graph are executed by the client machine and some by the server machine
- where the computation performed by the server machine uses Fully Homomorphic Encryption or Additive Homomorphic Encryption to compute over encrypted intermediate values of the tensor computation graph, the values being encrypted by the client machine and the results of the server computation being decrypted by the client machine
- where the computation performed by the server is part of the multi-headed attention layer, and the server computes the result of at least two layers of artificial neurons on the user's encrypted input while the client computes the matrix product of the outputs of these layers
- where the client requests computation from the server on encrypted data in the context of a unique computation session for which the server generates unique obfuscation material
- where the server applies a transformation, unique to the session, to obfuscate the results of the two layers it computes. When the client computes the matrix multiplication of the server's results, the result is not obfuscated.
- where the transformation of the first layer is obtained by multiplication with a random invertible matrix unique to the computation session and the transformation of the second layer is obtained by multiplication with the inverse of the previous invertible matrix.

### Selecting random unimodular matrix

Using a unimodular matrix in obfuscated multiplicative attention is advantageous since integer multiplication is easier to perform homomorphically. The inverse of an integer matrix is again an integer matrix if and only if the determinant of the matrix is ±1; such matrices are called unimodular.

There are various ways to randomly generate such matrices.

For example, one may start with the identity matrix, and iteratively: add a random row to another row, or a random column to another column, permute rows and/or columns, multiply random rows and/or columns by -1. As the number of rounds doing these operations the distribution matrix will be increasingly random.

For example, a pseudocode algorithm for generating a random unimodular matrix may be as follows.
1. Initialize matrix U as an identity matrix
3. Determine the number of iterations, optionally a random number.
4. For each iteration:
   - Randomly choose an operation: 'swap', 'multiply', or 'add'.
   - If 'swap': Select two random rows in U and swap them.
   - If 'multiply': Select a random row in U and multiply it by -1.
   - If 'add': Select two random rows of U and add the first row to the second row.
5. Return U.

For example, one may run the algorithm for a number of steps that depends on the size of U. The number may be empirically estimated, as it depends on how random the matrix U should be, which in turn depends on security considerations. Generally speaking by using more rounds the distribution of generated matrices will have more entropy. In practice however, it is not always needed to converge very closely to uniform distribution. In an embodiment, the algorithm runs for at least 200 rounds.

As another example, one may select a random permutation P, a random integer lower triangular matrix A, wherein the diagonal entries of A are only 1 or -1, and a random integer upper triangular matrix B, and compute *U = ABP;* normally referred to as an LUP decomposition.

Depending on the type of homomorphic encryption used, the computations may be done modulo a modulus, e.g., a modulus q. For example, the modulus may be a power of a small prime, e.g., a power of 2 or 3. For example, when using FHE, this may be used.

Furthermore, it may be desired that the entries of U remain relatively small, e.g., fit in a byte, or 7 bits. This can be achieved in the first embodiment, by limiting the number of rounds and/or by verifying before performing an addition step that the resulting matrix satisfies any condition on U, e.g., with regard to the size of entries. In the second embodiment, the size of entries in U may be controlled by keeping the entries in A and B small, e.g., smaller than a threshold that may be empirically chosen. Should a matrix U not satisfy the criteria after being derived from ABP, a new matrix may be randomly generated until one is found that does. Parameters to generate A and B randomly may be modified. For example entries in the matrices L and/or U may be reduced in size to limit the size of entries in U by reducing the threshold. A sparsity of matrices L and U may be increased, e.g., expressed as a percentage of zero entries.

In a neural network such as a transformer network, there are typically various types of layers, one of which may be an attention layer. For example, in the 'Attention is all you need' paper a block in an encoding part of the transformer comprises the following layers, listed in the order in which they are encountered when executing the network:
- Multi-head attention
- Add & norm
- Feed forward
- Add & norm

The encoding block may be repeated multiple times; In the paper six times is used. In the decoding part, the following layers are encountered
- (masked) Multi-head attention (1)
- Add & Norm
- Multi-Head attention (2)
- Add & Norm
- Feed Forward
- Add & Norm

The decoding block may be repeated multiple times; In the paper six times is used.

The add & norm layers may be residual connections around preceding layer followed by layer normalization.

The multi-head attention layer in the encoding part is a self-attention layer and computes multiple attention vectors for each hidden state obtained from the previous layer, which may be done according to an embodiment on a server device. The multiple attention vectors may then be concatenated into a single vector which is mapped to the multi-head output, e.g., by a linear operator. The multi-head attention layer (1) in the decoding part is a similar self-attention layer.

The multi-head attention layer (2) is an encoder-decoder attention layer. The computation of attention is the same except that queries are computed from the hidden states from the previous decoder layer, but the memory keys and values come from the output of the encoder. Such encoder-decoder attention layers complicate obfuscation. There are various ways to deal with this.

One option to deal with an encoder-decoder attention layer is not to use obfuscation for the final attention layer of the encoder part, nor in the encoder-decoder attention layer of the decoder.

Another option is to use a first obfuscation operator for the queries computed in the final encoder layer. The second obfuscation operator corresponding to the first obfuscation operator is stored and used in each of the subsequent encoder-decoder attention layers when computing the key values.

Yet a further option is to select a transformer architecture without encoder-decoder attention layers.

In an embodiment, one or more or all of the attention layers and/or feed-forward layers are at least partially performed by the server. The remaining operations may be performed locally by the client device. Part or all of the remaining computations may also be performed on the server device, even if that would mean that these computations are not obfuscated.

**Figure 3b** schematically shows an example of an embodiment of a neural network computation system.

The figure shows how a feed-forward neural network may be computed jointly between a client and a server. This will further reduce the number of weights that need to be shared with the client. The embodiment is protected to increase the workload for an attacker who wants to reconstruct the weights used by the server. Moreover, the algorithm works efficiently in additive homomorphic encryption, in particular FHE.

The feed-forward network may have the following form. $FFN \left(x\right) = f \left({xW}_{1}+{b}_{1}\right) {W}_{2} + {b}_{2}$

In this formula *W*₁, *W*₂, *b*₁, and *b*₂ are matrices. Here x may be a matrix, the rows of which are the hidden states. Instead of collecting all hidden states in a matrix x the formula may be performed per hidden states, or part of the hidden states; This facilitates parallelization. Generally speaking the hidden states could be represented as columns, with the appropriate changes to the formula. The bias *b*₁ and/or *b*₂ may be zero.

Depending on the homomorphic encryption the matrices *W*₁, *W*₂, *b*₁, and *b*₂ are integer matrices, e.g., obtained by quantizing corresponding floating point matrices obtained from training the neural network.

The function f is a non-linear function, e.g., an activation function. Various choices are possible for the activation function. Typically, activation functions are univariate non-linear functions mapping a larger range to a smaller range. Evaluating an activation function homomorphically is possible, but these are typically expensive operations. For example, the non-linear function f may be a ReLU, GELU, sigmoid, Tanh, etc. For example, the attention paper cited above uses a ReLU. The activation function is applied component wise.

The computation may be performed as follows. The client locally obtains a sequence of hidden states 350, e.g., as the output of a previous layer, an embedding layer, etc. Sequence of hidden states 350 is neither encrypted nor obfuscated. Sequence of hidden states 350 is homomorphically encrypted into an encrypted sequence of hidden states 351, which is sent to the server. The server computes an affine transformation *xW*₁ + *b*₁ on the hidden states 351 while they are encrypted. The resulting encrypted matrix *X = xW*₁ + *b*₁ is then permuted by the server to obtain a permuted matrix *X'.*

For example, the entries of X may be randomly shuffled. For example, if the size of *X* is *N* · *dᵢ*, then a random permutation out of *(N* · *dᵢ*)! possibilities may be chosen to permutate the entries of *X.* For simplicity the permutation may be chosen dependent upon X. For example, a permutation may be chosen that sorts the entries of matrix X.

It possible to use less random, but more convenient shuffling. For example, the server may select two random matrices *P*₁ and *P*₂ and compute *X' = P*₁*XP*₂*.* Instead of using two permutation matrices, a simplified implementation may use one of the permutation matrices and use the identity matrix for the other matrix e.g., only use *P*₂. As the homomorphic encryption is component wise, and the permutation is also component wise, this is a very efficient obfuscation. The resulting encrypted permuted first affine operation result 360 is returned to the client.

The client decrypts the encrypted permuted first affine operation result 360 to obtain permuted first affine operation result 361. This matrix is no-longer encrypted with the high security homomorphic encryption scheme, yet it still resists straight forward analysis due to the random permutation that is applied. The user applies the activation function component wise, thus obtaining non-linear function result 370. Result 370 is still not homomorphically encrypted, but is still permuted. The client then encrypts result 370 thus obtaining encrypted non-linear function result 371, which is sent to the server. The server first applies the inverse permutation to the matrix, and then applies the second affine transformation *xW*₂ + *b*₂ to obtain encrypted second affine operation result 380, which is sent back to the client. Finally, the client decrypts this to obtain second affine operation result 381.

Because the first affine operation result is only returned in permuted form, the client cannot use a straightforward linear algebra attack to reconstruct the weights *W*₁ and *b*₁. For example, a possible attack without permutation would be to send multiple one-hot matrices x to the server to return isolated parts from *W*₁ and *b*₁ for each request made. However, as the returned results are permuted this no longer works.

Secure joint computation of feed-forward networks is useful, in neural networks that also use attention layers, but even in neural networks that do not use attention, e.g., in an embodiment of a computation system in which the server is not configured to compute an obfuscated query matrix and/or obfuscated key matrix. For example, in an embodiment of the latter, a server method may be as follows:
A cryptographic method for a server device for secure two-party computation of a feed-forward network with a client device, the method comprising for the server device,
- receiving from the client device a sequence of hidden states, each state comprising a vector (e.g., *xᵢ*), the sequence of hidden states representing an intermediate computation result of a neural network computation,
- selecting random first and/or second permutation matrices,
- computing a first affine transformation on the received hidden states (e.g., *xW*₁ + *b*₁), and obfuscating the result by applying the first permutation matrix to permute the resulting columns and/or the second permutation matrix to permute the resulting rows (e.g., *P*₂(*xW*₁ + *b*₁)*P*₁)*,*
- returning the obfuscated affine transformation result to the client device, the client device being configured to apply an activation function thereto, and returning the activation result to the server,
- applying the inverse of the first permutation matrix to unpermute the columns and/or the inverse of the second permutation matrix to unpermute the rows,
- computing a second affine transformation on the unpermuted received hidden states (e.g., *xW*₂ *+ b*₂)*.*

A corresponding method for a client may be as follows:
A cryptographic method for a client device for secure two-party computation of a feed-forward network with a server device, the method comprising for the client device,
- sending to the server device a sequence of hidden states, each state comprising a vector (e.g., *xᵢ*), the sequence of hidden states representing an intermediate computation result of a neural network computation,
- receiving from the server device an obfuscated affine transformation result, the obfuscated affine transformation result being computed by applying a first permutation matrix to permute columns and/or a second permutation matrix to permute rows of a first affine transformation on the received hidden states computed by the server device,
- applying an activation function thereto, and returning the activation result to the server, the server being configured to apply the inverse of the first permutation matrix to unpermute the columns and/or the inverse of the second permutation matrix to unpermute the rows, and to compute a second affine transformation on the unpermuted received hidden states.

Notice is given that a divisional or continuation application may be filed on the above methods. The methods for jointly computing a feed forward network may also comprise a method for computing attention as in an embodiment. In the method for jointly computing a feed forward network the server preferably operates on additive homomorphically encrypted values. The above methods claims may be combined with any of the current claims, and/or with any of the embodiments set out herein.

Most additive homomorphic encryption schemes, including FHE, represent data as integers in a finite ring, e.g., the integer modulo q ( ${ℤ}_{q}$)*,* wherein q is a positive integer, often a power of a small prime, e.g., a power of 2 or a power of 3.

For example, during the encryption of hidden states the client may quantize the sequence of hidden states to integer form, so that the server receives the encrypted hidden states in integer form. This may be used, e.g., in the embodiments described with reference to figure 2, 3a, and 3b.

In particular, neural networks conventionally represent the inputs, activations, weights, and the like, as floating point values. To use additive homomorphic encryption, a neural network may be converted to use integer values. This conversion may also be done even if no homomorphic encryption is used, but for performance reasons. To convert from floating point to integers, quantization is used.

Quantization is the process of approximating floating point values with integers. Floating point numbers have a very fine resolution for representing real numbers, with a limited number of bits. Furthermore, the resolution of floating point numbers is inversely proportional to the absolute value of the number. When quantizing neural networks to use integers to improve computation performance, the number of bits of these integers is usually low, e.g., 8 bits or lower.

For the first and second obfuscation operation used in to obfuscate attention no quantization is needed, as they may directly be generated as an integer matrix. If a multiplicative inverse is needed, they can be generated as a unimodular matrix. The multiplicative weight matrices used in the affine transformations for attention may be quantized though.

In an embodiment, the obfuscation is performed on the weight matrices *(W, b)* rather than on the output of the affine transformation. This avoids having to perform two sequential matrix multiplications (e.g., multiplication with U after a multiplication with W) in the critical path, where the sequential matrix multiplications would contribute to the neural network's latency. A priori there are at least two ways to precompute the multiplicative matrix. Given floating point matrices *W_{f}* and *b_{f}* for the affine transformation *xW_{f} + b_{f},* one could precompute the multiplicative matrix in various ways. It turns out that quantize(*W_{f}*)*U* proved the best way to do this. Interestingly, alternative approaches such as quantize(*W_{f}U*) were less advantageous. For example, *W_{f}* may correspond to the floating point learned matrix used to compute queries or keys. The same observation holds for the bias matrix (if any), quantize(*b_{f}*)*U* being preferably.

In an embodiment, entries in quantize(*W_{f}*) and in the obfuscation matrix U use as most 8 bits, e.g., in the interval [0,255], or [-127, 128], while the matrix Q, may use 16 bit quantization. Note, that quantization may be chosen differently depending on the required accuracy. For example, in an embodiment, the Q matrix is quantized with more than 16 bit of quantization.

In an embodiment, the obfuscated query weight matrix and/or obfuscated key weight matrix are periodically recomputed with a new first and second obfuscation operation.

To quantize floating point values, several approaches are possible. First, a common one is to use uniform quantization. Define *x_{q} = quantize*(*x_{f}*) $\begin{matrix}{x}_{q} = clip \left(round\left(\left({x}_{f}-{min}_{{x}_{f}}\right)\frac{{2}^{n} - 1}{{{{max}_{{x}_{f}} - {min}_{{x}_{f}}}_{︸}}_{{q}_{x}}}\right){, 0 , 2}^{n}-1\right) \\ = clip \left(round\left(\frac{{x}_{f}}{{s}_{x}}-{{{min}_{{x}_{f}} {q}_{x}}_{︸}}_{{zp}_{x}}\right){, 0 , 2}^{n}-1\right) \\ = clip \left(round\left(\frac{{x}_{f}}{{s}_{x}}-{zp}_{x}\right){, 0 , 2}^{n}-1\right)\end{matrix}$ (3) where *qₓ* is the inverse of the scale factor *sₓ* and *zpₓ* is called the zero-point, *min_{x_{f}}* and *max_{x_{f}}* are limit the range of reals that are quantized to integer values and are computed on a representative set of data. *clip* is the function *clip(x, a, b) = a if x > a, b if x < b, else x* In uniform quantization, equal sized intervals of the real axis are assigned discrete values *x_{q}.*

The inverse of quantization is: ${x}_{f} = dequantize \left({x}_{q}\right) = {x}_{q} {s}_{x} + {zp}_{x}$

In neural networks adding quantization may be performed, e.g., by adding quantization operation nodes to the Directed Acyclic Graph of operations that represent the neural network computation.

To perform an operation such as convolution, ReLU or apply any other function one usually stores the quantization parameters q and *zp* , which map a floating point value to integers and back, of all the input of that operation. Both input and output quantization parameters can be computed based on statistics of the values the function is applied on during the calibration stage. To compute a univariate function on a float input *x_{f},* using a quantized representation *x_{q}* of *x_{f}* one would write: ${x}_{q} = quantize \left({x}_{f}, {q}_{x}, {zp}_{x}\right)$ ${y}_{q} = f \left({x}_{q}\right)$ ${y}_{q} = dequantize \left({y}_{q}, {q}_{y}, {zp}_{y}\right)$

The quantization and dequantization parameters *qₓ, zpₓ, q_{y}, zp_y* are computed by examining the values of *x_{f}* and *f*(*x_{f}*) respectively to compute the *max_x_{f}* and *min_x_{f}* for the inputs and their corresponding min/max for the outputs.

For operations such as matrix multiplication, the computation may be changed in the following manner: ${x}_{q} = quantize \left({x}_{f}, {q}_{x}, {zp}_{x}\right)$ ${w}_{q} = quantize \left({w}_{f}, {q}_{w}, {zp}_{w}\right)$ ${y}_{q} = {x}_{q} \times {w}_{q} - {x}_{q} {zp}_{w} - {w}_{q} {zp}_{x} + {zp}_{x} {zp}_{w}$

In the above formulation, it is convenient to consider that the quantization parameters of *y_{q}* are *s_{y} = s_{w}sₓ* and *zpₓ = -zpₓ* - *zp_{w}*. Then the floating point result of the matrix multiplication is ${y}_{f} = dequantize \left({y}_{q}, {s}_{y}, {zp}_{y}\right)$

It is possible to enforce that *zp* = 0 by taking *max_{xf} = max* (|(*x_{f}*)|) and *min_{xf} = -max_{xf}*
For example, in the context of multiplicative attention. In a calibration stage a model developer learns all weights *W_{Q}, W_{K}, W_{V}* for all layers of the model and computes quantization parameters for each weight matrix either individually or alternatively, the quantization parameters are computed considering groups of *W_{Q}, W_{K}, W_{V}* together, e.g., as a tensor, to compute their min/max. Usually a zero point of 0 is used for weight quantization. The server obtains learned weights *W_{Q}, W_{K}, W_{V}* quantization parameters for each weight matrix. The biases *b_{Q}* etc are quantized in the same scale as the corresponding weight matrix. The same would be true in the context of a feed forward layer. After quantization, the received weights may be protected by obfuscation as in an embodiment.

During decryption the client dequantizes the received obfuscated Q and K matrices before performing the computation of the raw attention weights H.

The same considerations concerning quantization. The same would be true in the context of a feed forward layer.

Referring to equation (7), the server computes $\begin{matrix}Q ′ = QU = \left({xW}_{Q}+{b}_{Q}\right) U \\ K ′ = KU = \left({xW}_{K}+{b}_{K}\right) {\left({U}^{- 1}\right)}^{T}\end{matrix}$ (7)

The client computes *H = Q K^{T}.* When quantization is used, it is common to quantize the bias in the scale of the matrix multiplication: *s_{b_{Q}} = sₓs_{W_{Q}},* to force *zp_{W_{Q}} =* 0 for simplicity and thus to obtain *zp_{b_{Q}} = zpₓ* Thus in quantized representation: $\begin{matrix}Q ′ = \left({x}_{q}{s}_{x}+{zp}_{x}\right) \left({W}_{{Q}_{q}}{s}_{{W}_{Q}}\right) + {b}_{Q} {s}_{{b}_{Q}} + {zp}_{x} \\ = {s}_{x} {s}_{{W}_{Q}} \left({x}_{q}{W}_{{Q}_{q}}+{b}_{Q}\right) + {zp}_{x} \left({\sum }_{j = 1 .. N} {W}_{{Q}_{q}}^{ij} + 1\right)\end{matrix}$

The dequantization parameters of Q'is typically determined by calibration, but could also be derived from the equation above as : ${s}_{Q}^{′} = {s}_{x} {s}_{{W}_{Q}}$ ${zp}_{Q ′} = {zp}_{x} \left({s}_{{W}_{q}}{\sum }_{j = 1 .. N} {W}_{{Q}_{q}}^{ij}+1\right)$

Note that multiplying U into the quantized representation of *Q, Q_{q}',* does force us to change the scale of *Q.* The same applies for K. Thus, the computation for the client may comprise:
1. Retrieve ${Q}_{q}^{′}$ and ${K}_{q}^{′}$ from the server
2. Dequantize them to obtain Q'and *K'.*
3. Compute H

### References

[1] Salamudeen Alhassan, Mohammed Muniru Iddrisu, and Mohammed Ibrahim Daabo. Perceptual video encryption using orthogonal matrix. International Journal of Computer Mathematics: Computer Systems Theory, 4(3-4):129-139, 2019.
[2] Wei-Ting Chang and Ravi Tandon. On the capacity of secure distributed matrix multiplication. In 2018 IEEE Global Communications Conference (GLOBECOM), pages 1-6, 2018.
[3] Xuhui Chen, Jinlong Ji, Lixing Yu, Changqing Luo, and Pan Li. Securenets: Secure inference of deep neural networks on an untrusted cloud. In Jun Zhu and Ichiro Takeuchi, editors, Proceedings of The 10th Asian Conference on Machine Learning, volume 95 of Proceedings of Machine Learning Research, pages 646-661. PMLR, 14-16 Nov 2018.
[4] Ye Dong, Wen jie Lu, Yancheng Zheng, Haoqi Wu, Derun Zhao, Jin Tan, Zhicong Huang, Cheng Hong, Tao Wei, and Wenguang Chen. Puma: Secure inference of llama-7b in five minutes, 2023.
[5] Marco Holz, Ágnes Kiss, Deevashwer Rathee, and Thomas Schneider. Linear-complexity private function evaluation is practical. September 2020. Event Title: 25. European Symposium on Research in Computer Security (ESORICS'20).
[6] Marco Holz, Ágnes Kiss, Deevashwer Rathee, and T. Schneider. Linear-complexity private function evaluation is practical. In IACR Cryptology ePrint Archive, 2020.
[7] Sergey Ioffe and Corinna Cortes. Batch normalization layers, July 2016.
[8] Khaled M. Khan and Mahboob Shaheen. Secure cloud services: Matrix multiplication revisited. In 2013 IEEE 16th International Conference on Computational Science and Engineering, pages 9-14, 2013.
[9] Malay Kumar, Jasraj Meena, and Manu Vardhan. Privacy preserving, verifiable and efficient outsourcing algorithm for matrix multiplication to a malicious cloud server. Cogent Engineering, 4(1):1295783, 2017.
[10] Ryan Lehmkuhl, Pratyush Mishra, Akshayaram Srinivasan, and Raluca Ada Popa. Muse: Secure inference resilient to malicious clients. In 30th USENIX Security Symposium (USENIX Security 21), pages 2201-2218. USENIX Association, August 2021.
[11] Daryna Oliynyk, Rudolf Mayer, and Andreas Rauber. I know what you trained last summer: A survey on stealing machine learning models and defences. ACM Comput. Surv., 55(14s), jul 2023.
[12] Ahmad-Reza Sadeghi and Thomas Schneider. Generalized universal circuits for secure evaluation of private functions with application to data classification. Cryptology ePrint Archive, Paper 2008/453, 2008. https://eprint.iacr.org/2008/453.
[13] Yu Wu, Yongjian Liao, Yikuan Liang, and Yulu Liu. Secure and efficient protocol for outsourcing large-scale matrix multiplication to the cloud. IEEE Access, 8:227556-227565, 2020.

**Figure** 4 schematically shows an example of an embodiment of a cryptographic method 400 for a server device for secure two-party computation of neural network attention weights with a client device. Method (400) may be computer implemented. Method 400 comprises for the server device,
- receiving (410) from the client device a sequence of hidden states, each state comprising a vector (e.g., *xᵢ*), the sequence of hidden states representing an intermediate computation result of a neural network computation,
- selecting (420) random first and second obfuscation operators,
- computing (430) an obfuscated query matrix (e.g., *QU; Q + U)* comprising for each hidden state in the sequence of hidden states the result of obfuscating with the first obfuscation operator a query vector (e.g., *xᵢW_{Q}; xᵢW_{Q}* + *b_{Q}*) corresponding to the hidden state (*xᵢ*),
- computing (440) an obfuscated key matrix (e.g., *K*(*U*^{*-*1})*^{T}*; *K + U)* comprising for each hidden state in the sequence of hidden states the result of obfuscating with the second obfuscation operator a key vector (e.g., *xᵢW_{K}*; *xᵢWₓ + b_{K}*) corresponding to the hidden state (*xᵢ*),
- returning (450) the obfuscated query matrix and the obfuscated key matrix to the client device, the client device being configured to apply an attention weight function thereto, wherein the first obfuscation operator and the second operator function are configured to cancel out in the attention weight function.

The multiplicative matrix in the affine transformation used in the neural network may have a first dimension exceeding at least 100, and a second dimension exceeding at least 50.

Many different ways of executing the method are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing a processor system to perform an embodiment of method 400. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform an embodiment of the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

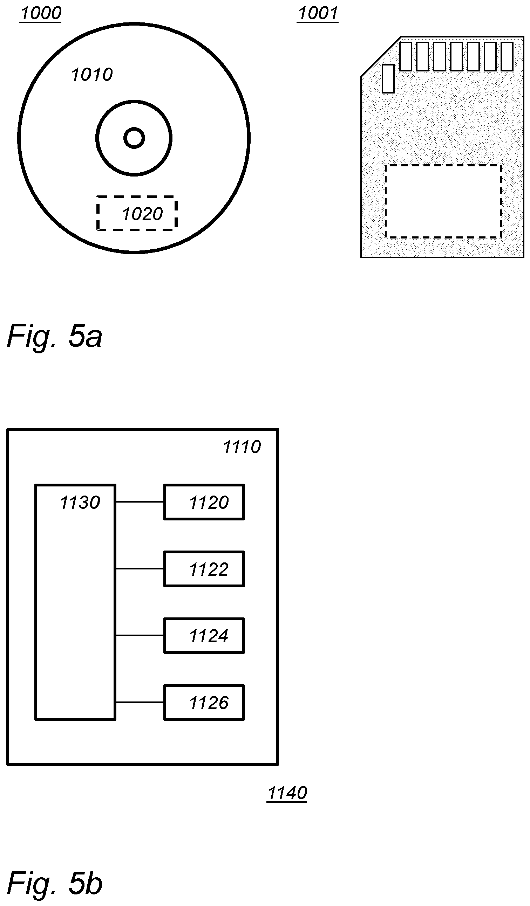

**Figure 5a** shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of a method for secure two-party computation of neural network attention weights, according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform an embodiment of said method for secure two-party computation of neural network attention weights.

**Figure 5b** shows in a schematic representation of a processor system 1140 according to an embodiment of a server device or a client device.

The processor system comprises one or more integrated circuits 1110. The architecture of the one or more integrated circuits 1110 is schematically shown in Figure 5b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1140 may be arranged for contact and/or contact-less communication, using an antenna and/or connectors, respectively.

For example, in an embodiment, processor system 1140, e.g., the server or client device may comprise a processor circuit and a memory circuit, the processor being arranged to execute software stored in the memory circuit. For example, the processor circuit may be an Intel Core i7 processor, ARM Cortex-R8, etc. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

While system 1140 is shown as including one of each described component, the various components may be duplicated in various embodiments. For example, the processing unit 1120 may include multiple microprocessors that are configured to independently execute the methods described herein or are configured to perform elements or subroutines of the methods described herein such that the multiple processors cooperate to achieve the functionality described herein. Further, where the system 1140 is implemented in a cloud computing system, the various hardware components may belong to separate physical systems. For example, the processor 1120 may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A cryptographic method (400) for a server device for secure two-party computation of neural network attention weights with a client device, the method comprising for the server device,
- receiving (410) from the client device a sequence of hidden states, each state comprising a vector (e.g., *xᵢ*), the sequence of hidden states representing an intermediate computation result of a neural network computation,
- selecting (420) random first and second obfuscation operators,
- computing (430) an obfuscated query matrix (e.g., QU) comprising for each hidden state in the sequence of hidden states the result of obfuscating with the first obfuscation operator a query vector (e.g., *xᵢW_{Q}; xᵢW_{Q} + b_{Q}*) corresponding to the hidden state (*xᵢ*),
- computing (440) an obfuscated key matrix (e.g., *K*(*U*⁻¹)*^{T}*) comprising for each hidden state in the sequence of hidden states the result of obfuscating with the second obfuscation operator a key vector (e.g., *xᵢW_{K}; xᵢW_{K} + b_{K}*) corresponding to the hidden state (*xᵢ*),
- returning (450) the obfuscated query matrix and the obfuscated key matrix to the client device, the client device being configured to apply an attention weight function thereto, wherein the first obfuscation operator and the second operator function are configured to cancel out in the attention weight function.

2. A cryptographic method as in any of the preceding claims, wherein the client device and the server device collaborate to compute a computation graph representing a neural network machine learning model, wherein part of the operations in the computation graph are executed by the client device and part of the operations by the server device.

3. A cryptographic method as in Claim 1,
- the attention weight function is a multiplicative attention weight function, the first obfuscation operator comprises a random matrix (U), and the second obfuscation operator comprises a multiplicative inverse of the random matrix, or
- the attention weight function is an additive attention weight function, the first obfuscation operator comprises a random matrix (U), and the second obfuscation operator comprises the same random matrix.

4. A cryptographic method as in any of the preceding claims, wherein
- the sequence of hidden states is received from the client device in encrypted form, encrypted according to a homomorphic encryption scheme, said homomorphic encryption scheme being at least additively homomorphic,
- computing the obfuscated query matrix and the obfuscated key matrix is homomorphically performed producing an encrypted result,
- the obfuscated query matrix and the obfuscated key matrix being returned to the client device in encrypted form, wherein the client device is configured to decrypt the obfuscated query matrix and the obfuscated key matrix before applying the attention weight function.

5. A cryptographic method as in Claim 4, wherein the sequence of hidden states is received from the client device in quantized and integer form.

6. A cryptographic method as in any of Claims 4-5, wherein the first and second obfuscation operation each comprise an integer matrix.

7. A cryptographic method as in any of Claims 4-6, wherein the attention weight function comprises a multiplication of the obfuscated query matrix and the obfuscated key matrix, the first obfuscation operation comprising a unimodular matrix, the first obfuscation operation comprising the inverse of the unimodular matrix.

8. A cryptographic method as in any of the preceding claims, wherein computing the obfuscated query matrix and/or the obfuscated key matrix comprise applying an integer linear or integer affine transformation.

9. A cryptographic method as in any of the preceding claims, wherein
- computing the obfuscated query matrix comprises multiplying the hidden states with an obfuscated query weight matrix, said obfuscated query weight matrix being obtained by quantizing a learned query weight matrix (*W_{Q}*) before applying the first obfuscation operation (e.g., *quantize*(*W_{Q}*) ** U),* and/or
- computing the obfuscated key matrix comprises multiplying the hidden states with an obfuscated key weight matrix, said obfuscated key weight matrix being obtained by quantizing a learned key weight matrix (*W_{Q}*) before applying the second obfuscation operation (e.g., *quantize*(*W_{Q}*) ** U*^{*-*1})*.*

10. A cryptographic method as in Claim 9, wherein a new obfuscated query weight matrix and/or obfuscated key weight matrix is periodically recomputed with a new first and second obfuscation operation.

11. A cryptographic method as in any of the preceding claims, wherein the client device masks part of the attention weights, and/or restricts applying the attention weight function to unmasked attention weights.

12. A cryptographic method as in any of the preceding claims, comprising cooperating with the client device to compute a feed-forward network comprising a first affine transformation on the hidden states to a space of inner dimension (e.g., *xW*₁ *+ b*₁), a non-linear operation (e.g., f, ReLu, GELU, sigmoid, tanh) and a second affine transformation (e.g., *xW*₁ + *b*₁) , wherein the first and second affine transformation are performed on the server device and the non-linear operation on the client device, the server including a random permutation in the first affine transformation (e.g., *xW*₁*P + b*₁*P*), and including the inverse of the random permutation in the second affine transformation.

13. A cryptographic method for a client device for secure two-party computation of neural network attention weights with a server device, the method comprising for the client device,
- computing a sequence of hidden states, each state comprising a vector (*xᵢ*), the sequence of hidden states representing an intermediate computation result of a neural network computation,
- sending the sequence of hidden states to the server device,
- receiving from the server device an obfuscated query matrix comprising for each hidden state in the sequence of hidden states the result of obfuscating with the first obfuscation operator a query vector corresponding to the hidden state (*xᵢ*),
- receiving from the server device an obfuscated key matrix comprising for each hidden state in the sequence of hidden states the result of obfuscating with the second obfuscation operator a key vector corresponding to the hidden state (*xᵢ*),
- applying an attention weight function to the obfuscated query matrix and obfuscated key matrix obtaining attention weights, wherein the first obfuscation operator and second operator function are configured to cancel out in the attention weight function.

14. A cryptographic method for a client device as in Claim 13, the method comprising for the client device,
- obtaining value vectors for each hidden state in the sequence of hidden states,
- for each hidden state computing a weighted sum of the value vectors, weighted with the attention weights (331) for the hidden state, thus obtaining for each hidden state a weighted value vector,
- updating the hidden states with the weighted value vectors.

15. A server device comprising: one or more processors; and one or more storage devices storing instructions that, when executed by the one or more processors, cause the one or more processors to perform operations for a method according to any of claims 1-12.

16. A client device comprising: one or more processors; and one or more storage devices storing instructions that, when executed by the one or more processors, cause the one or more processors to perform operations for a method according to any of claims 13-14.

17. A transitory or non-transitory computer readable medium encoded with instructions that, when executed by one or more computers, cause the one or more computers to perform the method according to any of claims 1-14.

## Patentansprüche

1. Kryptographisches Verfahren (400) für eine Servervorrichtung zur sicheren Zwei-Parteien-Berechnung von Aufmerksamkeitsgewichten eines neuronalen Netzes mit einer Clientvorrichtung, wobei das Verfahren für die Servervorrichtung umfasst,
- Empfangen (410) von der Clientvorrichtung einer Sequenz verborgener Zustände, wobei jeder Zustand einen Vektor (z. B. *xᵢ*) umfasst, wobei die Sequenz verborgener Zustände ein Zwischenergebnis einer Berechnung eines neuronalen Netzes darstellt,
- Auswählen (420) eines zufälligen ersten und eines zufälligen zweiten Verschleierungsoperators,
- Berechnen (430) einer verschleierten Abfragematrix (z. B. *QU*), die für jeden verborgenen Zustand in der Sequenz verborgener Zustände das Ergebnis einer Verschleierung mittels des ersten Verschleierungsoperators eines Abfragevektors (z. B. *xᵢW_{Q}*; *xᵢW_{Q}* + *b_{Q}*), der dem verborgenen Zustand (*xᵢ*) entspricht, umfasst,
- Berechnen (440) einer verschleierten Schlüsselmatrix (z. B. *K*(*U*⁻¹)*^{T}*), die für jeden verborgenen Zustand in der Sequenz verborgener Zustände das Ergebnis einer Verschleierung mittels des zweiten Verschleierungsoperators eines Schlüsselvektors (z. B. *xᵢW_{K}*; *xᵢW_{K}* + *b_{K}*), der dem verborgenen Zustand (*xᵢ*) entspricht, umfasst,
- Zurücksenden (450) der verschleierten Abfragematrix und der verschleierten Schlüsselmatrix an die Clientvorrichtung, wobei die Clientvorrichtung dazu eingerichtet ist, darauf eine Aufmerksamkeitsgewichtungsfunktion anzuwenden, wobei der erste Verschleierungsoperator und die zweite Operatorfunktion dazu eingerichtet sind, sich in der Aufmerksamkeitsgewichtungsfunktion gegenseitig aufzuheben.

2. Kryptographisches Verfahren nach einem der vorhergehenden Ansprüche, wobei die Clientvorrichtung und die Servervorrichtung zusammenwirken, um einen Berechnungsgraphen zu berechnen, der ein Modell eines neuronalen Netzes für maschinelles Lernen darstellt, wobei ein Teil der Operationen in dem Berechnungsgraphen von der Clientvorrichtung ausgeführt wird und ein Teil der Operationen von der Servervorrichtung ausgeführt wird.

3. Kryptographisches Verfahren nach Anspruch 1,
- die Aufmerksamkeitsgewichtungsfunktion eine multiplikative Aufmerksamkeitsgewichtungsfunktion ist, der erste Verschleierungsoperator eine zufällige Matrix (*U*) umfasst und der zweite Verschleierungsoperator eine multiplikative Inverse der zufälligen Matrix umfasst, oder
- die Aufmerksamkeitsgewichtungsfunktion eine additive Aufmerksamkeitsgewichtungsfunktion ist, der erste Verschleierungsoperator eine zufällige Matrix (*U*) umfasst und der zweite Verschleierungsoperator dieselbe zufällige Matrix umfasst.

4. Kryptographisches Verfahren nach einem der vorhergehenden Ansprüche, wobei
- die Sequenz verborgener Zustände von der Clientvorrichtung in verschlüsselter Form empfangen wird, wobei sie gemäß einem homomorphen Verschlüsselungsschema verschlüsselt ist, wobei das homomorphe Verschlüsselungsschema zumindest additiv homomorph ist,
- das Berechnen der verschleierten Abfragematrix und der verschleierten Schlüsselmatrix homomorph durchgeführt wird, wodurch ein verschlüsseltes Ergebnis erzeugt wird,
- die verschleierte Abfragematrix und die verschleierte Schlüsselmatrix in verschlüsselter Form an die Clientvorrichtung zurückgesendet werden, wobei die Clientvorrichtung dazu eingerichtet ist, die verschleierte Abfragematrix und die verschleierte Schlüsselmatrix vor dem Anwenden der Aufmerksamkeitsgewichtungsfunktion zu entschlüsseln.

5. Kryptographisches Verfahren nach Anspruch 4, wobei die Sequenz verborgener Zustände von der Clientvorrichtung in quantisierter und ganzzahliger Form empfangen wird.

6. Kryptographisches Verfahren nach einem der Ansprüche 4-5, wobei die erste und die zweite Verschleierungsoperation jeweils eine ganzzahlige Matrix umfassen.

7. Kryptographisches Verfahren nach einem der Ansprüche 4-6, wobei die Aufmerksamkeitsgewichtungsfunktion eine Multiplikation der verschleierten Abfragematrix und der verschleierten Schlüsselmatrix umfasst, wobei die erste Verschleierungsoperation eine unimodulare Matrix umfasst, wobei die erste Verschleierungsoperation die Inverse der unimodularen Matrix umfasst.

8. Kryptographisches Verfahren nach einem der vorhergehenden Ansprüche, wobei das Berechnen der verschleierten Abfragematrix und/oder der verschleierten Schlüsselmatrix das Anwenden einer ganzzahligen linearen oder ganzzahligen affinen Transformation umfasst.

9. Kryptographisches Verfahren nach einem der vorhergehenden Ansprüche, wobei
- das Berechnen der verschleierten Abfragematrix das Multiplizieren der verborgenen Zustände mit einer verschleierten Abfragegewichtsmatrix umfasst, wobei die verschleierte Abfragegewichtsmatrix durch Quantisieren einer gelernten Abfragegewichtsmatrix (*W_{Q}*) vor dem Anwenden der ersten Verschleierungsoperation (z. B. *quantize*(*W_{Q}*) * *U*) erhalten wird, und/oder
- das Berechnen der verschleierten Schlüsselmatrix das Multiplizieren der verborgenen Zustände mit einer verschleierten Schlüsselgewichtsmatrix umfasst, wobei die verschleierte Schlüsselgewichtsmatrix durch Quantisieren einer gelernten Schlüsselgewichtsmatrix (*W_{Q}*) vor dem Anwenden der zweiten Verschleierungsoperation (z. B. *quantize*(*W_{Q}*) * *U*⁻¹) erhalten wird.

10. Kryptographisches Verfahren nach Anspruch 9, wobei eine neue verschleierte Abfragegewichtsmatrix und/oder verschleierte Schlüsselgewichtsmatrix periodisch unter Verwendung einer neuen ersten und einer neuen zweiten Verschleierungsoperation neu berechnet wird.

11. Kryptographisches Verfahren nach einem der vorhergehenden Ansprüche, wobei die Clientvorrichtung einen Teil der Aufmerksamkeitsgewichte maskiert und/oder das Anwenden der Aufmerksamkeitsgewichtungsfunktion auf nicht maskierte Aufmerksamkeitsgewichte beschränkt.

12. Kryptographisches Verfahren nach einem der vorhergehenden Ansprüche, umfassend
Zusammenwirken mit der Clientvorrichtung zum Berechnen eines Feedforward-Netzwerks, das eine erste affine Transformation der verborgenen Zustände in einen Raum einer inneren Dimension (z. B. *xW*₁ + *b*₁), eine nichtlineare Operation (z. B. *f*, ReLu, GELU, sigmoid, tanh) und eine zweite affine Transformation (z. B. *xW*₁ + *b*₁) umfasst, wobei die erste und die zweite affine Transformation auf der Servervorrichtung und die nichtlineare Operation auf der Clientvorrichtung ausgeführt werden, wobei der Server eine zufällige Permutation in die erste affine Transformation (z. B. *xW*₁*P* + *b*₁*P*) einbezieht und die Inverse der zufälligen Permutation in die zweite affine Transformation einbezieht.

13. Kryptographisches Verfahren für eine Clientvorrichtung zur sicheren Zwei-Parteien-Berechnung von Aufmerksamkeitsgewichten eines neuronalen Netzes mit einer Servervorrichtung, wobei das Verfahren für die Clientvorrichtung umfasst,
- Berechnen einer Sequenz verborgener Zustände, wobei jeder Zustand einen Vektor (*xᵢ*) umfasst, wobei die Sequenz verborgener Zustände ein Zwischenergebnis einer Berechnung eines neuronalen Netzes darstellt,
- Senden der Sequenz verborgener Zustände an die Servervorrichtung,
- Empfangen von der Servervorrichtung einer verschleierten Abfragematrix, die für jeden verborgenen Zustand in der Sequenz verborgener Zustände das Ergebnis einer Verschleierung mittels des ersten Verschleierungsoperators eines dem verborgenen Zustand (*xᵢ*) entsprechenden Abfragevektors umfasst,
- Empfangen von der Servervorrichtung einer verschleierten Schlüsselmatrix, die für jeden verborgenen Zustand in der Sequenz verborgener Zustände das Ergebnis einer Verschleierung mittels des zweiten Verschleierungsoperators eines dem verborgenen Zustand (*xᵢ*) entsprechenden Schlüsselvektors umfasst,
- Anwenden einer Aufmerksamkeitsgewichtungsfunktion auf die verschleierte Abfragematrix und die verschleierte Schlüsselmatrix, wodurch Aufmerksamkeitsgewichte erhalten werden, wobei der erste Verschleierungsoperator und die zweite Operatorfunktion dazu eingerichtet sind, sich in der Aufmerksamkeitsgewichtungsfunktion gegenseitig aufzuheben.

14. Kryptographisches Verfahren für eine Clientvorrichtung nach Anspruch 13, wobei das Verfahren für die Clientvorrichtung umfasst,
- Erhalten von Wertevektoren für jeden verborgenen Zustand in der Sequenz verborgener Zustände,
- Berechnen für jeden verborgenen Zustand einer gewichteten Summe der Wertevektoren, gewichtet mit den Aufmerksamkeitsgewichten (331) für den verborgenen Zustand, wodurch für jeden verborgenen Zustand ein gewichteter Wertevektor erhalten wird,
- Aktualisieren der verborgenen Zustände mit den gewichteten Wertevektoren.

15. Servervorrichtung, umfassend: einen oder mehrere Prozessoren; und eine oder mehrere Speichervorrichtungen, die Anweisungen speichern, die, wenn sie von dem einen oder den mehreren Prozessoren ausgeführt werden, bewirken, dass der eine oder die mehreren Prozessoren Operationen für ein Verfahren nach einem der Ansprüche 1-12 durchführen.

16. Clientvorrichtung, umfassend: einen oder mehrere Prozessoren; und eine oder mehrere Speichervorrichtungen, die Anweisungen speichern, die, wenn sie von dem einen oder den mehreren Prozessoren ausgeführt werden, bewirken, dass der eine oder die mehreren Prozessoren Operationen für ein Verfahren nach einem der Ansprüche 13-14 durchführen.

17. Temporäres oder nichttemporäres computerlesbares Medium, das mit Anweisungen codiert ist, die, wenn sie von einem oder mehreren Computern ausgeführt werden, bewirken, dass der eine oder die mehreren Computer das Verfahren nach einem der Ansprüche 1-14 durchführen.

## Revendications

1. Procédé cryptographique (400) pour un dispositif serveur destiné au calcul sécurisé à deux parties de poids d'attention d'un réseau neuronal avec un dispositif client, le procédé comprenant, pour le dispositif serveur,
- la réception (410), en provenance du dispositif client, d'une séquence d'états cachés, chaque état comprenant un vecteur (par exemple, *xᵢ*), la séquence d'états cachés représentant un résultat intermédiaire de calcul d'un réseau neuronal,
- la sélection (420) d'un premier opérateur d'obfuscation aléatoire et d'un second opérateur d'obfuscation aléatoire,
- le calcul (430) d'une matrice de requêtes obfusquée (par exemple, *QU*) comprenant, pour chaque état caché de la séquence d'états cachés, le résultat de l'obfuscation, à l'aide du premier opérateur d'obfuscation, d'un vecteur de requête (par exemple, *xᵢW_{Q}*;*xᵢW_{Q}* + *b_{Q}*) correspondant à l'état caché (*xᵢ*),
- le calcul (440) d'une matrice de clés obfusquée (par exemple, *K*(*U*⁻¹)*^{T}*) comprenant, pour chaque état caché de la séquence d'états cachés, le résultat de l'obfuscation, à l'aide du second opérateur d'obfuscation, d'un vecteur de clé (par exemple, *xᵢW_{K}*; *xᵢW_{K}* + *b_{K}*) correspondant à l'état caché (*xᵢ*),
- le renvoi (450) de la matrice de requêtes obfusquée et de la matrice de clés obfusquée au dispositif client, le dispositif client étant configuré pour leur appliquer une fonction de pondération d'attention, le premier opérateur d'obfuscation et la fonction du second opérateur étant configurés pour s'annuler mutuellement dans la fonction de pondération d'attention.

2. Procédé cryptographique selon l'une quelconque des revendications précédentes, dans lequel le dispositif client et le dispositif serveur coopèrent pour calculer un graphe de calcul représentant un modèle d'apprentissage automatique à réseau neuronal, une partie des opérations dans le graphe de calcul étant exécutée par le dispositif client et une partie des opérations étant exécutée par le dispositif serveur.

3. Procédé cryptographique selon la revendication 1,
- la fonction de pondération d'attention est une fonction de pondération d'attention multiplicative, le premier opérateur d'obfuscation comprend une matrice aléatoire (*U*), et le second opérateur d'obfuscation comprend un inverse multiplicatif de la matrice aléatoire, ou
- la fonction de pondération d'attention est une fonction de pondération d'attention additive, le premier opérateur d'obfuscation comprend une matrice aléatoire (*U*), et le second opérateur d'obfuscation comprend la même matrice aléatoire.

4. Procédé cryptographique selon l'une quelconque des revendications précédentes, dans lequel
- la séquence d'états cachés est reçue du dispositif client sous forme chiffrée, chiffrée selon un schéma de chiffrement homomorphe, ledit schéma de chiffrement homomorphe étant au moins additivement homomorphe,
- le calcul de la matrice de requêtes obfusquée et de la matrice de clés obfusquée est effectué de manière homomorphe, produisant un résultat chiffré,
- la matrice de requêtes obfusquée et la matrice de clés obfusquée étant renvoyées au dispositif client sous forme chiffrée, le dispositif client étant configuré pour déchiffrer la matrice de requêtes obfusquée et la matrice de clés obfusquée avant d'appliquer la fonction de pondération d'attention.

5. Procédé cryptographique selon la revendication 4, dans lequel la séquence d'états cachés est reçue du dispositif client sous forme quantifiée et entière.

6. Procédé cryptographique selon l'une quelconque des revendications 4-5, dans lequel la première et la seconde opération d'obfuscation comprennent chacune une matrice entière.

7. Procédé cryptographique selon l'une quelconque des revendications 4-6, dans lequel la fonction de pondération d'attention comprend une multiplication de la matrice de requêtes obfusquée et de la matrice de clés obfusquée, la première opération d'obfuscation comprenant une matrice unimodulaire, la première opération d'obfuscation comprenant l'inverse de la matrice unimodulaire.

8. Procédé cryptographique selon l'une quelconque des revendications précédentes, dans lequel le calcul de la matrice de requêtes obfusquée et/ou de la matrice de clés obfusquée comprend l'application d'une transformation linéaire entière ou d'une transformation affine entière.

9. Procédé cryptographique selon l'une quelconque des revendications précédentes, dans lequel
- le calcul de la matrice de requêtes obfusquée comprend la multiplication des états cachés par une matrice de poids de requête obfusquée, ladite matrice de poids de requête obfusquée étant obtenue par quantification d'une matrice de poids de requête apprise (*W_{Q}*) avant l'application de la première opération d'obfuscation (par exemple, *quantize*(*W_{Q}*) ∗ *U*), et/ou
- le calcul de la matrice de clés obfusquée comprend la multiplication des états cachés par une matrice de poids de clé obfusquée, ladite matrice de poids de clé obfusquée étant obtenue par quantification d'une matrice de poids de clé apprise (*W_{Q}*) avant l'application de la seconde opération d'obfuscation (par exemple, *quantize*(*W_{Q}*) ∗ *U*⁻¹).

10. Procédé cryptographique selon la revendication 9, dans lequel une nouvelle matrice de poids de requête obfusquée et/ou matrice de poids de clé obfusquée est recalculée périodiquement au moyen d'une nouvelle première opération d'obfuscation et d'une nouvelle seconde opération d'obfuscation.

11. Procédé cryptographique selon l'une quelconque des revendications précédentes, dans lequel le dispositif client masque une partie des poids d'attention, et/ou restreint l'application de la fonction de pondération d'attention aux poids d'attention non masqués.

12. Procédé cryptographique selon l'une quelconque des revendications précédentes, comprenant
la coopération avec le dispositif client pour calculer un réseau à propagation avant comprenant une première transformation affine des états cachés vers un espace de dimension interne (par exemple, *xW*₁ + *b*₁), une opération non linéaire (par exemple, *f*, ReLu, GELU, sigmoid, tanh) et une seconde transformation affine (par exemple, *xW*₁ + *b*₁), dans lequel les première et seconde transformations affines sont effectuées sur le dispositif serveur et l'opération non linéaire sur le dispositif client, le serveur incluant une permutation aléatoire dans la première transformation affine (par exemple, *xW*₁*P* + *b*₁*P*), et incluant l'inverse de la permutation aléatoire dans la seconde transformation affine.

13. Procédé cryptographique pour un dispositif client destiné au calcul sécurisé à deux parties de poids d'attention d'un réseau neuronal avec un dispositif serveur, le procédé comprenant, pour le dispositif client,
- le calcul d'une séquence d'états cachés, chaque état comprenant un vecteur (*xᵢ*), la séquence d'états cachés représentant un résultat intermédiaire de calcul d'un réseau neuronal,
- l'envoi de la séquence d'états cachés au dispositif serveur,
- la réception, en provenance du dispositif serveur, d'une matrice de requêtes obfusquée comprenant, pour chaque état caché de la séquence d'états cachés, le résultat de l'obfuscation, à l'aide du premier opérateur d'obfuscation, d'un vecteur de requête correspondant à l'état caché (*xᵢ*),
- la réception, en provenance du dispositif serveur, d'une matrice de clés obfusquée comprenant, pour chaque état caché de la séquence d'états cachés, le résultat de l'obfuscation, à l'aide du second opérateur d'obfuscation, d'un vecteur de clé correspondant à l'état caché (*xᵢ*),
- l'application d'une fonction de pondération d'attention à la matrice de requêtes obfusquée et à la matrice de clés obfusquée, obtenant des poids d'attention, le premier opérateur d'obfuscation et la fonction du second opérateur étant configurés pour s'annuler mutuellement dans la fonction de pondération d'attention.

14. Procédé cryptographique pour un dispositif client selon la revendication 13, le procédé comprenant, pour le dispositif client,
- l'obtention de vecteurs de valeur pour chaque état caché dans la séquence d'états cachés,
- le calcul, pour chaque état caché, d'une somme pondérée des vecteurs de valeur, pondérée par les poids d'attention (331) pour l'état caché, obtenant ainsi, pour chaque état caché, un vecteur de valeur pondéré,
- la mise à jour des états cachés avec les vecteurs de valeur pondérés.

15. Dispositif serveur comprenant : un ou plusieurs processeurs ; et un ou plusieurs dispositifs de stockage stockant des instructions qui, lorsqu'elles sont exécutées par le ou les processeurs, amènent le ou les processeurs à effectuer des opérations pour un procédé selon l'une quelconque des revendications 1-12.

16. Dispositif client comprenant : un ou plusieurs processeurs ; et un ou plusieurs dispositifs de stockage stockant des instructions qui, lorsqu'elles sont exécutées par le ou les processeurs, amènent le ou les processeurs à effectuer des opérations pour un procédé selon l'une quelconque des revendications 13-14.

17. Support lisible par ordinateur transitoire ou non transitoire codé avec des instructions qui, lorsqu'elles sont exécutées par un ou plusieurs ordinateurs, amènent le ou les ordinateurs à exécuter le procédé selon l'une quelconque des revendications 1-14.
